# EUROPEAN PATENT APPLICATION

(11) **EP 3 872 308 A1**
(43) Date of publication of application: **01.09.2021**
(21) Application number: 19876108.2
(22) Date of filing: 21.10.2019
(51) Int. Cl.: F01N 3/01

(54) **VEHICLE-MOUNTED EXHAUST GAS AND AIR DUST REMOVAL SYSTEM, VEHICLE AND METHOD**

(30) Priority: 22.10.2018 CN 201811227550; 22.10.2018 CN 201811227573; 05.11.2018 CN 201811308119; 05.11.2018 CN 201811307602; 13.12.2018 CN 201811525874; 13.12.2018 CN 201811527816; 20.12.2018 CN 201811563797; 19.02.2019 CN 201910124517; 25.04.2019 CN 201910340445; 27.05.2019 CN 201910446294; 30.05.2019 CN 201910465124; 13.06.2019 CN 201910512533; 17.06.2019 CN 201910521796; 17.06.2019 CN 201910522488; 17.06.2019 CN 201910521793; 05.07.2019 CN 201910605156; 15.07.2019 CN 201910636710
(71) Applicant: Shanghai Bixiufu Enterprise Management Co., Ltd., Shanghai 201112 (CN)
(72) Inventor: TANG, Wanfu, Shanghai 201112 (CN); DUAN, Zhijun, Shanghai 201112 (CN); ZOU, Yongan, Shanghai 201112 (CN); XI, Yong, Shanghai 201112 (CN)
(74) Representative: Neumann, Ditmar
(86) International application number: PCT/CN2019/112152
(87) International publication number: WO 2020/083175

(57) **Abstract**

Disclosed is a vehicle-mounted exhaust gas and air deust removal system, comprising an exhaust gas inlet, an air inlet and an electric field device (1021). The vehicle-mounted exhaust gas and air dust removal system is capable of purifying exhaust gas and introduced air simultaneously.

## Description

### Technical field

The present invention belongs to the field of environmental protection, and it relates to an vehicle-mounted exhaust gas and air dust removal system, vehicle and method.

### Background

There are a large amount of particulates in engine exhaust gas, so it is necessary to filter the particulates in engine exhaust gas.

In the prior art, particulates are usually filtered by a diesel particulate filter (DPF). A DPF works in a combustion mode. Namely, after a porous structure is sufficiently blocked by carbon deposits and the temperature is raised up to an ignition point, natural combustion or supported combustion is carried out. Specifically, the working principle of a DPF is as follows. A gas intake containing particulates enters a honeycomb-shaped carrier of a DPF, the particulates are trapped in the honeycomb-shaped carrier, and most of the particulates have been filtered out when the gas intake flows out of the DPF. The carrier of a DPF is mainly made of cordierite, silicon carbide, aluminum titanate, and the like and can be selected and used according to practical conditions. However, the above-described manner of operation has the following drawbacks.
(1) Regeneration is needed when a DPF captures a certain amount of particulates. Otherwise, the engine exhaust backpressure will rise and the working state will deteriorate, seriously affecting performance and oil consumption and even blocking the DPF, which can cause engine failure. Thus, a DPF needs to be maintained regularly, and a catalyst needs to be added to it. Even with regular maintenance, the accumulation of particulates restricts an exhaust flow. As a result, the backpressure is increased, affecting the performance and fuel consumption of the engine.
(2) The dedusting effect of a DPF is unstable and fails to meet the latest filtering requirements of engine intake treatment.

In addition, for some polluted areas, the content of particulates in the air is also high, and the air quality is poor. Some devices are needed to filter the particulates in the air, so as to achieve the purpose of air purification. Therefore, it is urgent need for technical breakthrough of engine exhaust gas and air purification at the same time.

### Summary of the invention

In view of the above-mentioned needs, the technical problem to be solved by the present invention is to provide a vehicle-mounted exhaust gas and air dedusting system and vehicle and method thereof, which have a good dedusting effect on exhaust gas and can dedust the air at the same time.

In certain examples provided by the present invention, vehicle-mounted exhaust gas dedusting system includes an exhaust gas cooling device, which adds air to the exhaust gas to achieve an an exhaust gas cooling effect, whereas achieving the air purification by controlling the amount of air at the same time. Therefore, the present invention can achieve the air purification without providing the air purification system independently.

In order to achieve the above objects and other relevant objects, the following examples are provided in the present invention:
1.Example 1 of the present invention provides a vehicle-mounted exhaust gas and air dedusting system, including:
   An exhaust gas entrance;
   An air entrance;
   An electric field device, including the an electric field device entrance. an electric field device exit, an electric field cathode and an electric field anode, wherein the electric field cathode and the electric field anode are used to generate an ionization electric field;
   During working,
   The exhaust gas and the air pass through the exhaust gas entrance and the air entrance respectively and enter the dedusting system,
   The exhaust gas and the air pass through the electric field device entrance and enter the electric field device,
   The exhaust gas and the air are dedusted and purified by ionization electric field device;
   The exhaust gas and the air flow out the electric field device exit.
2. Example 2 of the present invention includes the vehicle-mounted exhaust gas and air dedusting system of Example 1, wherein the amount of air which is introduced is 50% to 300% of the weight of the exhaust gas.
3. Example 3 of the present invention includes the vehicle-mounted exhaust gas and air dedusting system of Example 1, wherein the amount of air which is introduced is 100% to 180% of the weight of the exhaust gas.
4. Example 4 of the present invention includes the vehicle-mounted exhaust gas and air dedusting system of Example 1, wherein the amount of air which is introduced is 120% to 150% of the weight of the exhaust gas.
5. Example 5 of the present invention includes the vehicle-mounted exhaust gas and air dedusting system of Example 1, wherein the amount of air which is introduced is 300% of the weight of the exhaust gas.
6. Example 6 of the present invention includes the vehicle-mounted exhaust gas and air dedusting system of any one of Examples 1-5, wherein the electric field anode includes a first anode portion and a second anode portion, the first anode portion is close to the electric field device entrance, the second anode portion is close to the electric field device exit, and at least one cathode supporting plate is provided between the first anode portion and the second anode portion.
7. Example 7 of the present invention includes the vehicle-mounted exhaust gas and air dedusting system of Example 6, wherein the electric field device further includes an insulation mechanism configured to realize insulation between the cathode supporting plate and the electric field anode.
8. Example 8 of the present invention includes the vehicle-mounted exhaust gas and air dedusting system of Example 7, wherein an electric field flow channel is formed between the electric field anode and the electric field cathode, and the insulation mechanism is provided outside the electric field flow channel.
9. Example 9 of the present invention includes the vehicle-mounted exhaust gas and air dedusting system of Example 7 or 8, wherein the insulation mechanism includes an insulation portion and a heat-protection portion, and the insulation portion is made of a ceramic material or a glass material.
10. Example 10 of the present invention includes the vehicle-mounted exhaust gas and air dedusting system of Example 9, wherein the insulation portion is an umbrella-shaped string ceramic column, an umbrella-shaped string glass column, a column-shaped string ceramic column or a column-shaped glass column, with the interior and exterior of the umbrella or the interior and exterior of the column being glazed.
11. Example 11 of the present invention includes the vehicle-mounted exhaust gas and air dedusting system of Example 10, wherein the distance between an outer edge of the umbrella-shaped string ceramic column or the umbrella-shaped string glass column and the exhaust gas dedusting electric field anode is greater than 1.4 times an electric field distance, the sum of the distances between umbrella protruding edges of the umbrella-shaped string ceramic column or the umbrella-shaped string glass column is greater than 1.4 times the insulation distance of the umbrella-shaped string ceramic column or the umbrella-shaped string glass column, and the total length of the inner depth of the umbrella edge of the umbrella-shaped string ceramic column or the umbrella-shaped string glass column is greater than 1.4 times the insulation distance of the umbrella-shaped string ceramic column or the umbrella-shaped string glass column.
12. Example 12 of the present invention includes the vehicle-mounted exhaust gas and air dedusting system of any one of Examples 6 to 11, wherein the length of the first anode portion accounts for 1/10 to 1/4, 1/4 to 1/3, 1/3 to 1/2, 1/2 to 2/3, 2/3 to 3/4, or 3/4 to 9/10 of the length of the exhaust gas dedusting electric field anode.
13. Example 13 of the present invention includes the vehicle-mounted exhaust gas and air dedusting system of any one of Examples 6 to 12, wherein the first anode portion has a sufficient length to eliminate a part of dust, reduce dust accumulated on the insulation mechanism and the cathode supporting plate, and reduce electrical breakdown caused by dust.
14. Example 14 of the present invention includes the vehicle-mounted exhaust gas and air dedusting system of any one of Examples 6 to 13, wherein the second anode portion includes a dust accumulation section and a reserved dust accumulation section.
15. Example 15 of the present invention includes the vehicle-mounted exhaust gas and air dedusting system of any one of Examples 1 to 14, wherein the electric field cathode includes at least one electrode bar.
16. Example 16 of the present invention includes the vehicle-mounted exhaust gas and air dedusting system of Example 15, wherein the electrode bar has a diameter of no more than 3 mm.
17. Example 17 of the present invention includes the vehicle-mounted exhaust gas and air dedusting system of Example 15 or 16, wherein the electrode bar has a needle shape, a polygonal shape, a burr shape, a threaded rod shape, or a columnar shape.
18. Example 18 of the present invention includes the vehicle-mounted exhaust gas and air dedusting system of any one of Examples 1 to 17, wherein the electric field anode is composed of hollow tube bundles.
19. Example 19 of the present invention includes the vehicle-mounted exhaust gas and air dedusting system of Example 18, wherein a hollow cross section of the tube bundle of the electric field anode has a circular shape or a polygonal shape.
20. Example 20 of the present invention includes the vehicle-mounted exhaust gas and air dedusting system of Example 19, wherein the polygonal shape is a hexagonal shape.
21. Example 21 of the present invention includes the vehicle-mounted exhaust gas and air dedusting system of any one of Examples 18 to 20, wherein the tube bundle of the electric field anode has a honeycomb shape.
22. Example 22 of the present invention includes the vehicle-mounted exhaust gas and air dedusting system of any one of Examples 1 to 21, wherein the electric field cathode is provided in the electric field anode in a penetrating manner.
23. Example 23 of the present invention includes the vehicle-mounted exhaust gas and air dedusting system of any one of Examples 1 to 22, wherein the electric field device performs a carbon black removing treatment when the dust is accumulated to a certain extent in the electric field.
24. Example 24 of the present invention includes the vehicle-mounted exhaust gas and air dedusting system of Example 23, wherein the electric field device detects an electric field current to determine whether the dust is accumulated to a certain extent and whether the carbon black removing treatment is needed.
25. Example 25 of the present invention includes the vehicle-mounted exhaust gas and air dedusting system of Example 23 or 24, wherein the electric field device increases an electric field voltage to perform the carbon black removing treatment.
26. Example 26 of the present invention includes the vehicle-mounted exhaust gas and air dedusting system of Example 23 or 24, wherein the electric field device performs the carbon black removing treatment using an electric field back corona discharge phenomenon.
27. Example 27 of the present invention includes the vehicle-mounted exhaust gas and air dedusting system of Example 23 or 24, wherein the electric field device uses an electric field back corona discharge phenomenon, increases a voltage, and restricts an injection current so that rapid discharge occurring at a deposition position of the anode generates plasmas, and the plasmas enable organic components of the carbon black to be deeply oxidized and break polymer bonds to form small molecular carbon dioxide and water, thus performing the carbon black removing treatment.
28. Example 28 of the present invention includes the vehicle-mounted exhaust gas and air dedusting system of any one of Examples 1 to 27, wherein the electric field anode has a length of 10-90 mm and the electric field cathode has a length of 10-90 mm.
29. Example 29 of the present invention includes the vehicle-mounted exhaust gas and air dedusting system of Example 28, wherein when the electric field has a temperature of 200°C, the corresponding dust collecting efficiency is 99.9%.
30. Example 30 of the present invention includes the vehicle-mounted exhaust gas and air dedusting system of Example 28 or 29, wherein when the electric field has a temperature of 400°C, the corresponding dust collecting efficiency is 90%.
31. Example 31 of the present invention includes the vehicle-mounted exhaust gas and air dedusting system of any one of Examples 28 to 30, wherein when the electric field has a temperature of 500°C, the corresponding dust collecting efficiency is 50%.
32. Example 32 of the present invention includes the vehicle-mounted exhaust gas and air dedusting system of any one of Examples 1 to 31, wherein the electric field device further includes an auxiliary electric field unit configured to generate an auxiliary electric field that is not parallel to the ionization electric field.
33. Example 33 of the present invention includes the vehicle-mounted exhaust gas and air dedusting system of any one of Examples 1 to 31, wherein the electric field device further includes an auxiliary electric field unit, the ionization electric field includes a flow channel, and the auxiliary electric field unit is configured to generate an auxiliary electric field that is not perpendicular to the flow channel.
34. Example 34 of the present invention includes the vehicle-mounted exhaust gas and air dedusting system of Example 32 or 33, wherein the auxiliary electric field unit includes a first electrode, and the first electrode of the auxiliary electric field unit is provided at or close to an entrance of the ionization electric field.
35. Example 35 of the present invention includes the vehicle-mounted exhaust gas and air dedusting system of Example 34, wherein the first electrode is a cathode.
36. Example 36 of the present invention includes the vehicle-mounted exhaust gas and air dedusting system of Example 34 or 35, wherein the first electrode of the auxiliary electric field unit is an extension of the electric field cathode.
37. Example 37 of the present invention includes the vehicle-mounted exhaust gas and air dedusting system of Example 36, wherein the first electrode of the auxiliary electric field unit and the electric field anode have an included angle α, wherein 0 °<α≤125 °, or 45 °<α≤125 °, or 60 °≤α≤100 °, or α=90 °.
38. Example 38 of the present invention includes the vehicle-mounted exhaust gas and air dedusting system of any one of Examples 32 to 37, wherein the auxiliary electric field unit includes a second electrode, and the second electrode of the auxiliary electric field unit is provided at or close to an exit of the ionization electric field.
39. Example 39 of the present invention includes the vehicle-mounted exhaust gas and air dedusting system of Example 38, wherein the second electrode is an anode.
40. Example 40 of the present invention includes the vehicle-mounted exhaust gas and air dedusting system of Example 38 or 39, wherein the second electrode of the auxiliary electric field unit is an extension of the electric field anode.
41. Example 41 of the present invention includes the vehicle-mounted exhaust gas and air dedusting system of Example 40, wherein the second electrode of the auxiliary electric field unit and the electric field cathode have an included angle α, wherein 0 °<α≤125 °, or 45 °<α≤125 °, or 60 °≤α≤100 °, or α=90 °.
42. Example 42 of the present invention includes the vehicle-mounted exhaust gas and air dedusting system of any one of Examples 32 to 35, 38 and 39, wherein electrodes of the auxiliary electric field and electrodes of the ionization electric field are provided independently of each other.
43. Example 43 of the present invention includes the vehicle-mounted exhaust gas and air dedusting system of any one of Examples 1 to 42, wherein the ratio of the dust accumulation area of the electric field anode to the discharge area of the electric field cathode is 1.667:1-1680:1.
44. Example 44 of the present invention includes the vehicle-mounted exhaust gas and air dedusting system of any one of Examples 1 to 42, wherein the ratio of the dust accumulation area of the electric field anode to the discharge area of the electric field cathode is 6.67:1-56.67:1.
45. Example 45 of the present invention includes the vehicle-mounted exhaust gas and air dedusting system of any one of Examples 1 to 44, wherein the electric field cathode has a diameter of 1-3 mm, and the inter-electrode distance between the electric field anode and the electric field cathode is 2.5-139.9 mm; and the ratio of the dust accumulation area of the electric field anode to the discharge area of the electric field cathode is 1.667:1-1680:1.
46. Example 46 of the present invention includes the vehicle-mounted exhaust gas and air dedusting system of any one of Examples 1 to 44, wherein the inter-electrode distance between the electric field anode and the electric field cathode is less than 150 mm.
47. Example 47 of the present invention includes the vehicle-mounted exhaust gas and air dedusting system of any one of Examples 1 to 44, wherein the inter-electrode distance between the electric field anode and the electric field cathode is 2.5-139.9 mm.
48. Example 48 of the present invention includes the vehicle-mounted exhaust gas and air dedusting system of any one of Examples 1 to 44, wherein the inter-electrode distance between the electric field anode and the electric field cathode is 5-100 mm.
49. Example 49 of the present invention includes the vehicle-mounted exhaust gas and air dedusting system of any one of Examples 1 to 48, wherein the electric field anode has a length of 10-180 mm.
50. Example 50 of the present invention includes the vehicle-mounted exhaust gas and air dedusting system of any one of Examples 1 to 48, wherein the electric field anode has a length of 60-180 mm.
51. Example 51 of the present invention includes the vehicle-mounted exhaust gas and air dedusting system of any one of Examples 1 to 50, wherein the electric field cathode has a length of 30-180 mm.
52. Example 52 of the present invention includes the vehicle-mounted exhaust gas and air dedusting system of any one of Examples 1 to 50, wherein the electric field cathode has a length of 54-176 mm.
53. Example 52 of the present invention includes the vehicle-mounted exhaust gas and air dedusting system of any one of Examples 43 to 52, wherein when running, the coupling time of the ionization electric field is ≤3.
54. Example 54 of the present invention includes the vehicle-mounted exhaust gas and air dedusting system of any one of Examples 32 to 52, wherein when running, the coupling time of the ionization electric field is ≤3.
55. Example 55 of the present invention includes the vehicle-mounted exhaust gas and air dedusting system of any one of Examples 1 to 54, wherein the voltage of the ionization electric field is in the range of 1 kv-50 kv.
56. Example 56 of the present invention includes the vehicle-mounted exhaust gas and air dedusting system of any one of Examples 1 to 55, wherein the electric field device further includes a plurality of connection housings, and serially connected electric field stages are connected by the connection housings.
57. Example 57 of the present invention includes the vehicle-mounted exhaust gas and air dedusting system of Example 56, wherein the distance between adjacent electric field stages is greater than 1.4 times the inter-electrode distance.
58. Example 58 of the present invention includes the vehicle-mounted exhaust gas and air dedusting system of any one of Examples 1 to 57, wherein the electric field device further includes a front electrode, and the front electrode is between the electric field device entrance and the ionization electric field formed by the electric field anode and the electric field cathode.
59. Example 59 of the present invention includes the vehicle-mounted exhaust gas and air dedusting system of Example 58, wherein the front electrode has a point shape, a linear shape, a net shape, a perforated plate shape, a plate shape, a needle rod shape, a ball cage shape, a box shape, a tubular shape, a natural shape of a substance, or a processed shape of a substance.
60. Example 60 of the present invention includes the vehicle-mounted exhaust gas and air dedusting system of Example 58 or 59, wherein the front electrode is provided with an exhaust gas through hole.
61. Example 61 of the present invention includes the vehicle-mounted exhaust gas and air dedusting system of Example 60, wherein the exhaust gas through hole has a polygonal shape, a circular shape, an oval shape, a square shape, a rectangular shape, a trapezoidal shape, or a diamond shape.
62. Example 62 of the present invention includes the vehicle-mounted exhaust gas and air dedusting system of Example 60 or 61, wherein the exhaust gas through hole has a diameter of 0.1-3 mm.
63. Example 63 of the present invention includes the vehicle-mounted exhaust gas and air dedusting system of any one of Examples 58 to 62, wherein the front electrode is in one or a combination of states selected from solid, liquid, a gas molecular group, or a plasma.
64. Example 64 of the present invention includes the vehicle-mounted exhaust gas and air dedusting system of any one of Examples 58 to 63, wherein the front electrode is an electrically conductive substance in a mixed state, a natural mixed electrically conductive substance of organism , or an electrically conductive substance formed by manual processing of an object.
65. Example 65 of the present invention includes the vehicle-mounted exhaust gas and air dedusting system of any one of Examples 58 to 64, wherein the front electrode is 304 steel or graphite.
66. Example 66 of the present invention includes the vehicle-mounted exhaust gas and air dedusting system of any one of Examples 58 to 64, wherein the front electrode is an ion-containing electrically conductive liquid.
67. Example 67 of the present invention includes the vehicle-mounted exhaust gas and air dedusting system of any one of Examples 58 to 66, wherein during working, before a gas carrying pollutants enters the ionization electric field formed by the electric field cathode and the electric field anode and when the gas carrying pollutants passes through the front electrode, the front electrode enables the pollutants in the gas to be charged.
68. Example 68 of the present invention includes the vehicle-mounted exhaust gas and air dedusting system of Example 67, wherein when the gas carrying pollutants enters the ionization electric field, the electric field anode applies an attractive force to the charged pollutants such that the pollutants move towards the electric field anode until the pollutants are attached to the electric field anode.
69. Example 69 of the present invention includes the vehicle-mounted exhaust gas and air dedusting system of Example 67 or 68, wherein the front electrode directs electrons into the pollutants, and the electrons are transferred among the pollutants located between the front electrode and the electric field anode to enable more pollutants to be charged.
70. Example 70 of the present invention includes the vehicle-mounted exhaust gas and air dedusting system of any one of Examples 66 to 68, wherein the front electrode and the electric field anode conduct electrons therebetween through the pollutants and form a current.
71. Example 71 of the present invention includes the vehicle-mounted exhaust gas and air dedusting system of any one of Examples 67 to 70, wherein the front electrode enables the pollutants to be charged by contacting the pollutants.
72. Example 72 of the present invention includes the vehicle-mounted exhaust gas and air dedusting system of any one of Examples 67 to 71, wherein the front electrode enables the pollutants to be charged by energy fluctuation.
73. Example 73 of the present invention includes the vehicle-mounted exhaust gas and air dedusting system of any one of Examples 67 to 72, wherein the front electrode is provided with an exhaust gas through hole.
74. Example 74 of the present invention includes the vehicle-mounted exhaust gas and air dedusting system of any one of Examples 58 to 73, wherein the front electrode has a linear shape and the electric field anode has a planar shape.
75. Example 75 of the present invention includes the vehicle-mounted exhaust gas and air dedusting system of any one of Examples 58 to 74, wherein the front electrode is perpendicular to the electric field anode.
76. Example 76 of the present invention includes the vehicle-mounted exhaust gas and air dedusting system of any one of Examples 58 to 75, wherein the front electrode is parallel to the electric field anode.
77. Example 77 of the present invention includes the vehicle-mounted exhaust gas and air dedusting system of any one of Examples 58 to 76, wherein the front electrode has a curved shape or an arcuate shape.
78. Example 78 of the present invention includes the vehicle-mounted exhaust gas and air dedusting system of any one of Examples 58 to 77, wherein the front electrode uses a wire mesh.
79. Example 79 of the present invention includes the vehicle-mounted exhaust gas and air dedusting system of any one of Examples 58 to 78, wherein a voltage between the front electrode and the electric field anode is different from a voltage between the electric field cathode and the electric field anode.
80. Example 80 of the present invention includes the vehicle-mounted exhaust gas and air dedusting system of any one of Examples 58 to 79, wherein the voltage between the front electrode and the electric field anode is lower than a corona inception voltage.
81. Example 81 of the present invention includes the vehicle-mounted exhaust gas and air dedusting system of any one of Examples 58 to 79, wherein the voltage between the front electrode and the electric field anode is 0.1 kv/mm-2 kv/mm.
82. Example 82 of the present invention includes the vehicle-mounted exhaust gas and air dedusting system of any one of Examples 58 to 81, wherein the electric field device includes an exhaust gas flow channel, the front electrode is located in the exhaust gas flow channel, and the cross-sectional area of the front electrode to the cross-sectional area of the exhaust gas flow channel is 99%-10%, 90-10%, 80-20%, 70-30%, 60-40%, or 50%.
83. Example 83 of the present invention includes the vehicle-mounted exhaust gas and air dedusting system of any one of Examples 1 to 82, wherein the electric field device includes an electret element.
84. Example 84 of the present invention includes the vehicle-mounted exhaust gas and air dedusting system of Example 83, wherein when the electric field anode and the electric field cathode are powered on, the electret element is in the ionization electric field.
85. Example 85 of the present invention includes the vehicle-mounted exhaust gas and air dedusting system of Example 83 or 84, wherein the electret element is close to the electric field device exit, or the electret element is provided at the electric field device exit.
86. Example 86 of the present invention includes the vehicle-mounted exhaust gas and air dedusting system of any one of Examples 83 to 85, wherein the electric field anode and the electric field cathode form an exhaust gas flow channel, and the electret element is provided in the exhaust gas flow channel.
87. Example 87 of the present invention includes the vehicle-mounted exhaust gas and air dedusting system of Example 86, wherein the exhaust gas flow channel includes an exhaust gas flow channel exit, and the electret element is close to the exhaust gas flow channel exit or the electret element is provided at the exhaust gas flow channel exit.
88. Example 88 of the present invention includes the vehicle-mounted exhaust gas and air dedusting system of Example 86 or 87, wherein the cross section of the electret element in the exhaust gas flow channel occupies 5%-100% of the cross section of the exhaust gas flow channel.
89. Example 201 of the present invention includes the vehicle-mounted exhaust gas and air dedusting system of Example 88, wherein the cross section of the electret element in the exhaust gas flow channel occupies 10%-90%, 20%-80%, or 40%-60% of the cross section of the exhaust gas flow channel.
90. Example 90 of the present invention includes the vehicle-mounted exhaust gas and air dedusting system of any one of Examples 83 to 89, wherein the ionization electric field charges the electret element.
91. Example 91 of the present invention includes the vehicle-mounted exhaust gas and air dedusting system of any one of Examples 83 to 90, wherein the electret element has a porous structure.
92. Example 92 of the present invention includes the vehicle-mounted exhaust gas and air dedusting system of any one of Examples 83 to 91, wherein the electret element is a textile.
93. Example 93 of the present invention includes the vehicle-mounted exhaust gas and air dedusting system of any one of Examples 83 to 92, wherein the electric field anode has a tubular interior, the electret element has a tubular exterior, and the electric field anode is disposed around the electret element like a sleeve.
94. Example 94 of the present invention includes the vehicle-mounted exhaust gas and air dedusting system of any one of Examples 83 to 93, wherein the electret element is detachably connected with the electric field anode.
95. Example 95 of the present invention includes the vehicle-mounted exhaust gas and air dedusting system of any one of Examples 83 to 94, wherein materials forming the electret element include an inorganic compound having electret properties.
96. Example 96 of the present invention includes the vehicle-mounted exhaust gas and air dedusting system of Example 95, wherein the inorganic compound is one or a combination of compounds selected from an oxygen-containing compound, a nitrogen-containing compound, and a glass fiber.
97. Example 97 of the present invention includes the vehicle-mounted exhaust gas and air dedusting system of Example 96, wherein the oxygen-containing compound is one or a combination of compounds selected from a metal-based oxide, an oxygen-containing complex, and an oxygen-containing inorganic heteropoly acid salt.
98. Example 98 of the present invention includes the vehicle-mounted exhaust gas and air dedusting system of Example 97, wherein the metal-based oxide is one or a combination of oxides selected from aluminum oxide, zinc oxide, zirconium oxide, titanium oxide, barium oxide, tantalum oxide, silicon oxide, lead oxide, and tin oxide.
99. Example 99 of the present invention includes the vehicle-mounted exhaust gas and air dedusting system of Example 97, wherein the metal-based oxide is aluminum oxide.
100. Example 100 of the present invention includes the vehicle-mounted exhaust gas and air dedusting system of Example 97, wherein the oxygen-containing complex is one or a combination selected from composite titanium-zirconium oxides or composite titanium-barium oxides.
101. Example 101 of the present invention includes the vehicle-mounted exhaust gas and air dedusting system of Example 97, wherein the oxygen-containing inorganic heteropoly acid salt is one or a combination of salts selected from zirconium titanate, lead zirconate titanate, and barium titanate.
102. Example 102 of the present invention includes the vehicle-mounted exhaust gas and air dedusting system of Example 96, wherein the nitrogen-containing compound is silicon nitride.
103. Example 103 of the present invention includes the vehicle-mounted exhaust gas and air dedusting system of any one of Examples 83 to 102, wherein materials forming the electret element include an organic compound having electret properties.
104. Example 104 of the present invention includes the vehicle-mounted exhaust gas and air dedusting system of Example 103, wherein the organic compound is one or a combination of compounds selected from fluoropolymers, polycarbonates, PP, PE, PVC, natural wax, resin, and rosin.
105. Example 105 of the present invention includes the vehicle-mounted exhaust gas and air dedusting system of Example 104, wherein the fluoropolymer is one or a combination of materials selected from polytetrafluoroethylene, Polyperfluoro ethylene-propylene, soluble polytetrafluoroethylene, and polyvinylidene fluoride.
106. Example 106 of the present invention includes the vehicle-mounted exhaust gas and air dedusting system of Example 104, wherein the fluoropolymer is polytetrafluoroethylene.
107. Example 107 of the present invention includes the vehicle-mounted exhaust gas and air dedusting system of any one of Examples 1 to 106 and further includes an equalizing device.
108. Example 108 of the present invention includes the vehicle-mounted exhaust gas and air dedusting system of Example 107, wherein the equalizing device is disposed between the air entrance, exhaust gas entrance and the ionization electric field formed by the electric field anode and the electric field cathode, and when the electric field anode is a square body, the equalizing device includes an inlet pipe located on one side of the electric field anode and an outlet pipe located on the other side, wherein the inlet pipe is opposite to the outlet pipe.
109. Example 109 of the present invention includes the vehicle-mounted exhaust gas and air dedusting system of Example 107, wherein the equalizing device is disposed between the air entrance, exhaust gas entrance and the ionization electric field formed by the electric field anode and the electric field cathode, and when the electric field anode is a cylinder, the equalizing device is composed of a plurality of rotatable equalizing blades.
110. Example 110 of the present invention includes the vehicle-mounted exhaust gas and air dedusting system of Example 107, wherein the equalizing device includes a first venturi plate equalizing mechanism and a second venturi plate equalizing mechanism provided at an outlet end of the electric field anode, the first venturi plate equalizing mechanism is provided with inlet holes, the second venturi plate equalizing mechanism is provided with outlet holes, the inlet holes and the outlet holes are arranged in a staggered manner, a front surface is used for gas intake, and a side surface is used for gas discharge, thereby forming a cyclone structure.
111. Example 111 of the present invention includes the vehicle-mounted exhaust gas and air dedusting system of any one of Examples 1 to 110 and further includes a water-removing device configured to remove liquid water before the electric field device entrance.
112. Example 112 of the present invention includes the vehicle-mounted exhaust gas and air dedusting system of Example 111, wherein when the exhaust gas temperature or the engine temperature is lower than a certain temperature, the water-removing device removes liquid water in the exhaust gas.
113. Example 113 of the present invention includes the vehicle-mounted exhaust gas and air dedusting system of Example 112, wherein the certain temperature is above 90°C and below 100°C.
114. Example 114 of the present invention includes the vehicle-mounted exhaust gas and air dedusting system of Example 112, wherein the certain temperature is above 80°C and below 90°C.
115. Example 115 of the present invention includes the vehicle-mounted exhaust gas and air dedusting system of Example 112, wherein the certain temperature is below 80°C.
116. Example 116 of the present invention includes the vehicle-mounted exhaust gas and air dedusting system of Examples 111 to 115, wherein the water-removing device is an electrocoagulation device.
117. Example 117 of the present invention includes the vehicle-mounted exhaust gas and air dedusting system of any one of Example 1 to 116, further includes the engine.
118. Example 118 of the present invention provides a vehicle, including the vehicle-mounted exhaust gas and air dedusting system of any one of Example 1 to 117.
119. Example 119 of the present invention provides an method of purifying pollutant area air, including driving the vehicle of Example 118 in the pollutant areas.,

### Description of drawings

FIG. 1 is a perspective structural schematic diagram of an embodiment of an exhaust gas treatment device in the vehicle-mounted exhaust gas and air dedusting system in the present invention.
FIG. 2 is a structural schematic diagram of an embodiment of an umbrella-shaped insulation mechanism in the exhaust gas treatment device in the vehicle-mounted exhaust gas and air dedusting system in the present invention.
FIG. 3A is an implementation structural diagram of an equalizing device of the exhaust gas treatment device in the vehicle-mounted exhaust gas and air dedusting system of the present invention.
FIG. 3B is another implementation structural diagram of an equalizing device of the exhaust gas treatment device in the vehicle-mounted exhaust gas and air dedusting system of the present invention.
FIG. 3C is a further implementation structural diagram of the equalizing device of the exhaust gas treatment device in the vehicle-mounted exhaust gas and air dedusting system of the present invention.
FIG. 4 is a first schematic diagram of the electric field device in Embodiment 2 of the present invention.
FIG. 5 is a second schematic diagram of the electric field device in Embodiment 3 of the present invention.
FIG. 6 is a top view of the electric field device in FIG. 5 of the present invention.
FIG. 7 is a schematic diagram of the cross section of an exhaust gas flow channel occupied by the cross section of an electret element in the exhaust gas flow channel in Embodiment 3.
FIG. 8 is a schematic diagram of the vehicle-mounted exhaust gas and air dedusting system in Embodiment 4 of the present invention.
FIG. 9 is a structural schematic diagram of an electric field generating unit.
FIG. 10 is a view taken along line A-A of the electric field generating unit in FIG. 9.
FIG. 11 is view taken along line A-A of the electric field generating unit in FIG. 9, with lengths and an angle being marked.
FIG. 12 is a structural schematic diagram of an electric field device having two electric field stages.
FIG. 13 is a structural schematic diagram of the electric field device in Embodiment 17 of the present invention.
FIG. 14 is a structural schematic diagram of the electric field device in Embodiment 19 of the present invention.
FIG. 15 is a structural schematic diagram of the electric field device in Embodiment 20 of the present invention.

### Modes for carrying out the invention

The embodiments of the present invention are illustrated below with respect to specific embodiments. Those familiar with the art will be able to readily understand other advantages and effects of the present invention from the disclosure in the present specification.

It should be noted that structures, ratios, sizes, and the like shown in the drawings of the present specification are only used for cooperation with the disclosure of the specification so as to be understood and read by those familiar with the art, rather than being used to limit the conditions under which the present invention can be implemented. Thus, they have no substantive technical significance, and any structural modifications, changes of ratio relationships or size adjustment still fall within the scope that can be covered by the technical contents disclosed in the present invention without affecting the effects that can be produced by the present invention and the objects that can be achieved. Terms such as "upper", "lower", "left", "right", "middle" and "one (a, an)", and the like referred to in the present specification are merely for clarity of description rather than being intended to limit the implementable scope of the present invention, and changes or alterations of relative relationships thereof without substantial technical changes should also be considered as being within the implementable scope of the present invention

The vehicle exhaust gas and air dedusting system are communicated with the exit of the engine. The exhaust gas from the engine will flow through the vehicle-mounted exhaust gas and air dedusting system.

In one embodiment of the invention, the vehicle tail gas and air dedusting system may include an tail gas entrance, an air entrance and an electric field device. The electric field device includes an electric field device entrance, an electric field device exit, an electric field cathode and an electric field anode. The electric field cathode and an electric field anode are used to generate an ionization electric field.

In one embodiment of the invention, the vehicle-mounted tail gas and air dedusting system includes a tail gas cooling device. The tail gas cooling device may include a fan, which passes air into the tail gas and plays a cooling role on the tail gas before the entrance of the tail gas electric field device, which is conducive to improving the ionization dedusting efficiency. During cooling, the air can be 50 to 300 % of the tail gas, or 100 to 180 %, or 120 to 150 %. During working, the tail gas and air enter the vehicle-mounted tail gas and air dedusting system respectively through the tail gas entrance and air entrance, tail gas and air enter the electric field device through the entrance, tail gas and air dedusting and purification through the ionization electric field, tail gas and air flow out of the electric field device exit.

Therefore, the vehicle exhaust gas gas and air dedusting system in this embodiment can purify the exhaust gas and the imported air at the same time, and achieve the effect of purifying the air.

According to one embodiment of the vehicle-mounted exhaust gas and air dedusting system of the present invention, the amount of air which is introduced is 50% to 300% of the weight of the exhaust gas.

According to one embodiment of the vehicle-mounted exhaust gas and air dedusting system of the present invention, the amount of air which is introduced is 100% to 180% of the weight of the exhaust gas.

According to one embodiment of the vehicle-mounted exhaust gas and air dedusting system of the present invention, the amount of air which is introduced is 120% to 150% of the weight of the exhaust gas.

According to one embodiment of the vehicle-mounted exhaust gas and air dedusting system of the present invention, the amount of air which is introduced is higher than 300% of the weight of the exhaust gas.

According to one embodiment of the present invention, the vehicle-mounted exhaust gas and air dedusting system further includes a water-removing device configured to remove liquid water before the electric field device entrance.

According to one embodiment of the present invention, when the exhaust gas temperature or the engine temperature is lower than a certain temperature, liquid water may be contained in the engine exhaust gas and the water-removing device removes liquid water in the exhaust gas.

According to one embodiment of the present invention, the certain temperature is above 90°C and below 100°C.

According to one embodiment of the present invention, the certain temperature is above 80°C and below 90°C.

According to one embodiment of the present invention, the certain temperature is below 80 °C.

According to one embodiment of the present invention, the water-removing device is any water-removing device in the art.

Those skilled in the art did not recognize the technical problem which occurs when the exhaust gas temperature is low. For example, when the exhaust gas temperature of the engine or the engine temperature is low, there will be liquid water in the exhaust gas, and the water is adsorbed on the electric field cathode and the electric field anode, causing non-uniform electric discharge and ignition of the ionization electric field. The inventor of the present invention discovered this problem and proposes providing the vehicle-mounted exhaust gas and air dedusting system with a water-removing device configured to remove liquid water before the electric field device entrance. The liquid water has electrical conductivity, shortens an ionization distance, causes non-uniform electric discharge of the ionization electric field, and easily causes electrode breakdown. The water-removing device removes drops of water, i.e., liquid water in the exhaust gas before the electric field device entrance during a cold start of the engine so as reduce drops of water, i.e. liquid water in the exhaust gas, and reduce non-uniform electric discharge of the ionization electric field and breakdown of the electric field cathode and the electric field anode, thereby improving the ionization dedusting efficiency and achieving an unexpected technical effect. There is no particular limitation on the water-removing device, and any prior art water removing device capable of removing the liquid water in the exhaust gas can be applied to the present invention.

In one embodiment of the present invention, the vehicle-mounted exhaust gas and air dedusting system further includes engine.

According to one embodiment of the present invention, the vehicle-mounted exhaust gas and air dedusting system may include an equalizing device. According to one embodiment of the present invention, the equalizing device is disposed in front of the electric field device, thereby enable the air flow uniformly passing the electric field device.

According to one embodiment of the present invention, the equalizing device is disposed between the air entrance, exhaust gas entrance and the ionization electric field formed by the electric field anode and the electric field cathode, and when the electric field anode is a square body, the equalizing device includes an inlet pipe located on one side of the electric field anode and an outlet pipe located on the other side, wherein the inlet pipe is opposite to the outlet pipe.

According to one embodiment of the present invention, the equalizing device is disposed between the air entrance, exhaust gas entrance and the ionization electric field formed by the electric field anode and the electric field cathode, and when the electric field anode is a cylinder, the equalizing device is composed of a plurality of rotatable equalizing blades.

According to one embodiment of the present invention, the equalizing device includes a first venturi plate equalizing mechanism and a second venturi plate equalizing mechanism provided at an outlet end of the electric field anode, the first venturi plate equalizing mechanism is provided with inlet holes, the second venturi plate equalizing mechanism is provided with outlet holes, the inlet holes and the outlet holes are arranged in a staggered manner, a front surface is used for gas intake, and a side surface is used for gas discharge, thereby forming a cyclone structure.

In an embodiment of the present invention, the electric field anode of the electric field device can be a cubic body, the equalizing device can include an inlet pipe located at one side of a cathode supporting plate, and an outlet pipe located at the other side of the cathode supporting plate, and the cathode supporting plate is located at an inlet end of the electric field anode, wherein the side on which the inlet pipe is mounted is opposite to the side on which the outlet pipe is mounted. The equalizing device can enable the exhaust gas and air entering the electric field device to uniformly pass through an electrostatic field.

In an embodiment of the present invention, the electric field anode may be a cylindrical body, the equalizing device is between the air the entrance, exhaust gas entrance and the ionization electric field formed by the electric field anode and the electric field cathode, and the equalizing device includes a plurality of equalizing blades rotating around a center of the electric field device entrance. The equalizing device can enable varied amounts of gas to uniformly pass through the electric field generated by the electric field anode, and at the same time can maintain a constant internal temperature and sufficient oxygen for the electric field anode. The equalizing device can enable the exhaust gas and the air entering the electric field device to uniformly pass through an electrostatic field.

In an embodiment of the present invention, the equalizing device includes an air inlet plate provided at the inlet end of the electric field anode and an air outlet plate provided at the exit end of the electric field anode. The air inlet plate is provided with inlet holes, the air outlet plate is provided with outlet holes, and the inlet holes and the outlet holes are arranged in a staggered manner. A front surface is used for gas intake, and a side surface is used for gas discharge, thereby forming a cyclone structure. The equalizing device can enable the exhaust gas and air entering the electric field device to uniformly pass through an electrostatic field.

In an embodiment of the present invention, the electric field device includes a front electrode. The front electrode is located between the electric field device entrance and the ionization electric field formed by the electric field anode and the electric field cathode. When a gas flows through the front electrode from the electric field device entrance, particulates and the like in the gas will be charged.

In an embodiment of the present invention, the shape of the front electrode may be a point shape, a linear shape, a net shape, a perforated plate shape, a plate shape, a needle rod shape, a ball cage shape, a box shape, a tubular shape, a natural shape of a substance, or a processed shape of a substance. When the front electrode is a porous structure, the front electrode is provided with one or more exhaust gas through holes. In an embodiment of the present invention, each exhaust gas through hole may have a polygonal shape, a circular shape, an oval shape, a square shape, a rectangular shape, a trapezoidal shape, or a diamond shape. In an embodiment of the present invention, an outline of each exhaust gas through hole may have a size of 0.1-3 mm, 0.1-0.2 mm, 0.2-0.5 mm, 0.5-1 mm, 1-1.2 mm, 1.2-1.5 mm, 1.5-2 mm, 2-2.5 mm, 2.5-2.8 mm, or 2.8-3 mm.

In an embodiment of the present invention, the front electrode may be in one or a combination of more states of solid, liquid, a gas molecular group, a plasma, an electrically conductive substance in a mixed state, a natural mixed electrically conductive of organism, or an electrically conductive substance formed by manual processing of an object. When the front electrode is a solid, a solid metal, such as 304 steel, or other solid conductors such as graphite can be used. When the front electrode is liquid, it may be an ion-containing electrically conductive liquid.

During working, before a gas carrying pollutants enters the ionization electric field formed by the electric field anode and the electric field cathode, and when the gas carrying pollutants passes through the front electrode, the front electrode enables the pollutants in the gas to be charged. When the gas carrying pollutants enters the ionization electric field, the electric field anode applies an attractive force to the charged pollutants such that the pollutants move towards the electric field anode until the pollutants are attached to the electric field anode.

In an embodiment of the present invention, the front electrode directs electrons into the pollutants, and the electrons are transferred among the pollutants located between the front electrode and the electric field anode to enable more pollutants to be charged. The front electrode and the electric field anode conduct electrons therebetween through the pollutants and form a current.

In an embodiment of the present invention, the front electrode enables the pollutants to be charged by contacting the pollutants. In an embodiment of the present invention, the front electrode enables the pollutants to be charged by energy fluctuation. In an embodiment of the present invention, the front electrode transfers the electrons to the pollutants by contacting the pollutants and enables the pollutants to be charged. In an embodiment of the present invention, the front electrode transfers the electrons to the pollutants by energy fluctuation and enables the pollutants to be charged.

In an embodiment of the present invention, the front electrode has a linear shape, and the electric field anode has a planar shape. In an embodiment of the present invention, the front electrode is perpendicular to the electric field anode. In an embodiment of the present invention, the front electrode is parallel to the electric field anode. In an embodiment of the present invention, the front electrode has a curved shape or an arcuate shape. In an embodiment of the present invention, the front electrode uses a wire mesh. In an embodiment of the present invention, the voltage between the front electrode and the electric field anode is different from the voltage between the electric field cathode and the electric field anode. In an embodiment of the present invention, the voltage between the front electrode and the electric field anode is lower than a corona inception voltage. The corona inception voltage is a minimal value of the voltage between the electric field cathode and the electric field anode. In an embodiment of the present invention, the voltage between the front electrode and the electric field anode may be 0.1-2 kv/mm.

In an embodiment of the present invention, the electric field device includes an exhaust gas flow channel, and the front electrode is located in the exhaust gas flow channel. The exhaust gas flow channel is also named as the first-stage flow channel. In an embodiment of the present invention, the cross-sectional area of the front electrode to the cross-sectional area of the exhaust gas flow channel is 99%-10%, 90-10%, 80-20%, 70-30%, 60-40%, or 50%. The cross-sectional area of the front electrode refers to the sum of the areas of entity parts of the front electrode along a cross section. In an embodiment of the present invention, the front electrode carries a negative potential.

In an embodiment of the present invention, when the exhaust gas flows into the exhaust gas flow channel through the electric field device entrance, when pollutants in the exhaust gas with relatively strong electrical conductivity, such as metal dust, mist drops, or aerosols, contact the exhaust gas front electrode or the distance between the pollutants and the exhaust gas front electrode reaches a certain range, the pollutants will be directly negatively charged. Subsequently, all of the pollutants enter the ionization electric field with a gas flow, and the electric field anode applies an attractive force to the negatively charged metal dust, mist drops, aerosols and the like and enables the negatively charged pollutants to move towards the electric field anode until this part of the pollutants is attached to the electric field anode, realizing collection of this part of pollutants. The ionization electric field formed between the electric field anode and the electric field cathode obtains oxygen ions by ionizing oxygen in the gas, and the negatively charged oxygen ions, after being combined with common dust, enable common dust to be negatively charged. The electric field anode applies an attractive force to this part of the negatively charged dust and other pollutants and enables the pollutants such as dust to move towards the electric field anode until this part of the pollutants is attached to the electric field anode, realizing collection of this part of pollutants such as common dust such that all pollutants with relatively strong electrical conductivity and pollutants with relatively weak electrical conductivity in the gas are collected. The electric field anode is capable of collecting a wider variety of pollutants in the gas and having a stronger collecting capability and higher collecting efficiency.

In an embodiment of the present invention, the electric field device entrance communicates with the exit of the engine

In an embodiment of the present invention, the electric field device may include an electric field cathode and an electric field anode. An ionization electric field is formed between the electric field cathode and the electric field anode. When the exhaust gas enters the ionization electric field, oxygen ions in the exhaust gas will be ionized, and a large amount of charged oxygen ions will be formed. The oxygen ions are combined with dust and other particulates in the exhaust gas, such that the particulates are charged. The electric field anode applies an attractive force to the negatively charged particulates such that the particulates are attached to the electric field anode so as to eliminate the particulates in the exhaust gas.

In an embodiment of the present invention, the electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, high temperature-resistant, are capable of supporting their own weight, and are electrochemically stable. In an embodiment of the present invention, titanium is selected as the material of the cathode filaments. The specific shape of the cathode filaments is adjusted according to the shape of the exhaust gas dedusting electric field anode. For example, if a dust accumulation surface of the electric field anode is a flat surface, the cross section of each cathode filament is circular. If a dust accumulation surface of the electric field anode is an arcuate surface, the cathode filament needs to be designed with a polyhedral shape. The length of the cathode filaments is adjusted according to the electric field anode.

In an embodiment of the present invention, the electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the electric field anode. For example, if a dust accumulation surface of the electric field anode is a flat surface, the cross section of each cathode bar needs to be designed to have a circular shape. If a dust accumulation surface of the electric field anode is an arcuate surface, each cathode bar needs to be designed to have a polyhedral shape.

In an embodiment of the present invention, the electric field cathode is provided in the electric field anode in a penetrating manner.

In an embodiment of the present invention, the electric field anode includes one or more hollow anode tubes provided in parallel. When there is a plurality of hollow anode tubes, all of the hollow anode tubes constitute a honeycomb-shaped electric field anode. In an embodiment of the present invention, the cross section of each hollow anode tube may be circular or polygonal. If the cross section of each hollow anode tube is circular, a uniform electric field can be formed between the electric field anode and the electric field cathode, and dust is not easily accumulated on the inner walls of the hollow anode tubes. If the cross section of each hollow anode tube is triangular, 3 dust accumulation surfaces and 3 distant-angle dust holding corners can be formed on the inner wall of each hollow anode tube. A hollow anode tube having such a structure has the highest dust holding rate. If the cross section of each hollow anode tube is quadrilateral, 4 dust accumulation surfaces and 4 dust holding corners can be formed, but the assembled structure is unstable. The "polygonal" can be "hexagonal". If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm. In an embodiment of the present invention, the electric field anode can be composed of a bundle of hollow tubes. In an embodiment of the present invention, the bundle of electric field is of honeycomb-shaped.

In an embodiment of the present invention, the electric field cathode is mounted on a cathode supporting plate, and the cathode supporting plate is connected with the electric field anode through an exhaust insulation mechanism. In an embodiment of the present invention, the electric field anode includes a first anode portion and a second anode portion. The first anode portion is close to the electric field device entrance, and the second anode portion is close to the electric field device exit. At least one cathode supporting plate is provided between the first anode portion and the second anode portion. The cathode supporting plate and the insulation mechanism are between the first anode portion and the second anode portion. Namely, the insulation mechanism is mounted in the middle of the ionization electric field or in the middle of the electric field cathode and can well serve the function of supporting the electric field cathode, and functions to fix the electric field cathode with respect to the electric field anode such that a set distance is maintained between the electric field cathode and the electric field anode. While in the prior art, a support point of a cathode is at an end point of the cathode, and the distance between the cathode and an anode cannot be reliably maintained. In an embodiment of the present invention, the insulation mechanism is provided outside an electric field flow channel, i.e., outside a second-stage flow channel so as to prevent or reduce aggregation of dust and the like in the exhaust gas on the insulation mechanism, which can cause breakdown or electrical conduction of the insulation mechanism.

In an embodiment of the present invention, the insulation mechanism uses a high-pressure-resistant ceramic insulator for insulation between the electric field cathode and the electric field anode. The electric field anode is also referred to as a housing.

In an embodiment of the present invention, the first anode portion is located in front of the cathode supporting plate and the insulation mechanism in a gas flow direction. The first anode portion can remove water in the exhaust gas, thus preventing water from entering the insulation mechanism to cause a short circuit and ignition of the insulation mechanism. Moreover, the third anode portion can also remove a considerable part of dust in the exhaust gas. When the exhaust gas passes through the insulation mechanism, a considerable part of dust has been removed, thus reducing the possibility of a short circuit of the insulation mechanism caused by the dust. In an embodiment of the present invention, the insulation mechanism includes an insulating porcelain pillar. The design of the first anode portion is mainly for the purpose of protecting the insulating porcelain pillar against pollution by particulates and the like in the gas. Once the gas pollutes the insulating porcelain pillar, it will cause breakover of the electric field anode and the electric field cathode, thus disabling the dust accumulation function of the electric field anode. Therefore, the design of the first anode portion can effectively reduce pollution of the insulating porcelain pillar and increase the service life of the product. In a process in which the exhaust gas flows through the second-stage flow channel, the first anode portion and the electric field cathode first contact the polluting gas, and then the insulation mechanism contacts the gas. As a result, the purpose is achieved of first removing dust and then passing through the insulation mechanism, pollution of the insulation mechanism is reduced, prolonging the cleaning maintenance cycle, and the corresponding electrodes are supported in an insulating manner after use. In an embodiment of the present invention, the first anode portion has a sufficient length to remove a part of the dust, reduce the dust accumulated on the insulation mechanism and the cathode supporting plate, and reduce electric breakdown caused by the dust. In an embodiment of the present invention, the length of the first anode portion accounts for 1/10 to 1/4, 1/4 to 1/3, 1/3 to 1/2, 1/2 to 2/3, 2/3 to 3/4, or 3/4 to 9/10 of the total length of the electric field anode.

In an embodiment of the present invention, the second anode portion is located behind the cathode supporting plate and the insulation mechanism in a flow direction of exhaust gas. The second anode portion includes a dust accumulation section and a reserved dust accumulation section, wherein the dust accumulation section adsorbs particulates in the exhaust gas utilizing static electricity. The dust accumulation section is for the purpose of increasing the dust accumulation area and prolonging the service life of the electric field device. The reserved dust accumulation section can provide fault protection for the dust accumulation section. The reserved dust accumulation section aims at further increasing the dust accumulation area with the goal of meeting the design dedusting requirements. The reserved dust accumulation section is used for supplementing dust accumulation in the front section. In an embodiment of the present invention, the reserved dust accumulation section and the first anode portion may use different power supplies.

In an embodiment of the present invention, as there is an extremely high potential difference between the electric field cathode and the electric field anode, in order to prevent breakover of the electric field cathode and the electric field anode, the insulation mechanism is provided outside the second-stage flow channel between electric field cathode and the electric field anode. Therefore, the insulation mechanism is suspended outside the electric field anode. In an embodiment of the present invention, the insulation mechanism may be made of a non-conductive, temperature-resistant material such as ceramic or glass. In an embodiment of the present invention, insulation with a completely air-free material requires an isolation thickness of >0.3 mm/kv for insulation; while air insulation requires >1.4 mm/kv. The insulation distance can be set to 1.4 times the inter-electrode distance between the electric field cathode and the electric field anode. In an embodiment of the present invention, the insulation mechanism is made of a ceramic, with a surface thereof being glazed. No glue or organic material filling can be used for connection, and the insulation mechanism should be resistant to a temperature higher than 350°C.

In an embodiment of the present invention, the insulation mechanism includes an insulation portion and a heat-protection portion. In order to enable the insulation mechanism to have an anti-fouling function, the insulation portion is made of a ceramic material or a glass material. In an embodiment of the present invention, the insulation portion may be an umbrella-shaped string ceramic column or glass column, with the interior and exterior of the umbrella being glazed. The distance between an outer edge of the umbrella-shaped string ceramic column or the umbrella-shaped string glass column and the electric field anode is greater than 1.4 times an electric field distance. The sum of the distances between the umbrella protruding edges of the umbrella-shaped string ceramic column or glass column is greater than 1.4 times the insulation distance of the umbrella-shaped string ceramic column. The total length of the inner depth of the umbrella edge of the umbrella-shaped string ceramic column or glass column is greater than 1.4 times the insulation distance of the umbrella-shaped string ceramic column. The insulation portion may also be a column-shaped string ceramic column or a glass column, with the interior and exterior of the column being glazed. In an embodiment of the present invention, the insulation portion may also have a tower-like shape.

In an embodiment of the present invention, a heating rod is provided inside the insulation portion. When the temperature around the insulation portion is close to the dew point, the heating rod is started and heats up. Due to the temperature difference between the inside and the outside of the insulation portion during use, condensation is easily created inside and outside the insulation portion. An outer surface of the insulation portion may spontaneously or be heated by gas to generate high temperatures. Necessary isolation and protection are required to prevent burns. The heat-protection portion includes a protective enclosure baffle and a denitration purification reaction chamber located outside the second insulation portion. In an embodiment of the present invention, a position of a tail portion of the insulation portion that needs condensation also needs heat insulation to prevent the environment and heat radiation high temperature from heating a condensation component.

In an embodiment of the present invention, a lead-out wire of a power supply of the electric field device is connected by passing through a wall using an umbrella-shaped string ceramic column or glass column. The cathode supporting plate is connected inside the wall using a flexible contact. An airtight insulation protective wiring cap is used outside the wall for plug-in connection. The insulation distance between a lead-out wire conductor running through the wall and the wall is greater than the ceramic insulation distance of the umbrella-shaped string ceramic column or glass column. In an embodiment of the present invention, a high-voltage part, without a lead wire, is directly installed on an end socket to ensure safety. The overall external insulation of a high-voltage module has an ip68, and heat is exchanged and dissipated by a medium.

In an embodiment of the present invention, the electric field cathode and the electric field anode are asymmetric with respect to each other. In a symmetric electric field, polar particles are subjected to forces of the same magnitude but in opposite directions, and the polar particles reciprocate in the electric field. In an asymmetric electric field, polar particles are subjected to forces of different magnitudes, and the polar particles move in the direction with a greater force, thereby avoiding generation of coupling.

An ionization electric field is formed between the electric field cathode and the electric field anode of the electric field device in the present invention. In order to reduce electric field coupling of the ionization electric field, in an embodiment of the present invention, a method for reducing electric field coupling includes a step of selecting the ratio of the dust collection area of the electric field anode to the discharge area of the electric field cathode to enable the coupling time of the electric field to be ≤3. In an embodiment of the present invention, the ratio of the dust collection area of the electric field anode to the discharge area of the electric field cathode may be 1.667:1-1680:1, 3.334:1-113.34:1, 6.67:1-56.67:1, or 13.34:1-28.33:1. In this embodiment, a relatively large dust collection area of the electric field anode and a relatively minute discharge area of the electric field cathode are selected. By specifically selecting the above area ratios, the discharge area of the electric field cathode can be reduced to decrease the suction force. In addition, enlarging the dust collection area of the electric field anode increases the suction force. Namely, an asymmetric electrode suction force is generated between the electric field cathode and the electric field anode such that the dust, after being charged, falls onto a dust collecting surface of the electric field anode. Then although the polarity of the dust has been changed, the dust can no longer be sucked away by the electric field cathode, thus reducing electric field coupling and realizing a coupling time of the electric field of ≤3. That is, when the inter-electrode distance of the electric field is less than 150 mm, the coupling time of the electric field is≤3, the energy consumption of the electric field is low, and coupling consumption of the electric field to aerosols, water mist, oil mist, and loose smooth particulates can be reduced, thereby saving the electric energy consumption of the electric field by 30-50%. The dust collection area refers to the area of a working surface of the electric field anode. For example, if the electric field anode has the shape of a hollow regular hexagonal tube, the dust collection area is just the inner surface area of the hollow regular hexagonal tube. The dust collection area is also referred to as the dust accumulation area. The discharge area refers to the area of a working surface of the electric field cathode. For example, if the electric field cathode has a rod shape, the discharge area is just the outer surface area of the rod shape.

In an embodiment of the present invention, the electric field anode may have a length of 10-180 mm, 10-20 mm, 20-30 mm, 60-180 mm, 30-40 mm, 40-50 mm, 50-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-180 mm, 60 mm, 180 mm, 10 mm, or 30 mm. The length of the electric field anode refers to a minimal length of the working surface of the electric field anode from one end to the other end. By selecting such a length for the electric field anode, electric field coupling can be effectively reduced.

In an embodiment of the present invention, the electric field anode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm, or 85-90 mm. Selecting such a length can enable the electric field anode and the electric field device to have resistance to high temperatures and allows the exhaust gas electric field device to have a high-efficiency dust collecting capability under the impact of high temperatures.

In an embodiment of the present invention, the electric field cathode may have a length of 30-180 mm, 54-176 mm, 30-40 mm, 40-50 mm, 50-54 mm, 54-60 mm, 60-70 mm, 70-80 mm, 80-90 mm, 90-100 mm, 100-110 mm, 110-120 mm, 120-130 mm, 130-140 mm, 140-150 mm, 150-160 mm, 160-170 mm, 170-176 mm, 170-180 mm, 54 mm, 180 mm, or 30 mm. The length of the electric field cathode refers to a minimal length of the working surface of the electric field cathode from one end to the other end. By selecting such a length for the electric field cathode, electric field coupling can be effectively reduced.

In an embodiment of the present invention, the electric field cathode may have a length of 10-90 mm, 15-20 mm, 20-25 mm, 25-30 mm, 30-35 mm, 35-40 mm, 40-45 mm, 45-50 mm, 50-55 mm, 55-60 mm, 60-65 mm, 65-70 mm, 70-75 mm, 75-80 mm, 80-85 mm, or 85-90 mm. Selecting such a length can enable the electric field cathode and the electric field device to have resistance to high temperatures and allows the electric field device to have a high-efficiency dust collecting capability under the impact of high temperatures. In the above, when the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In an embodiment of the present invention, the distance between the electric field anode and the electric field cathode may be 5-30 mm, 2.5-139.9 mm, 9.9-139.9 mm, 2.5-9.9 mm, 9.9-20 mm, 20-30 mm, 30-40 mm, 40-50 mm, 50-60 mm, 60-70 mm, 70-80 mm, 80-90 mm, 90-100 mm, 100-110 mm, 110-120 mm, 120-130 mm, 130-139.9 mm, 9.9 mm, 139.9 mm, or 2.5 mm. The distance between the electric field anode and the electric field cathode is also referred to as the inter-electrode distance. The inter-electrode distance refers to a minimal vertical distance between the working surfaces of the electric field anode and the electric field cathode. Selection of the inter-electrode distance in this manner can effectively reduce electric field coupling and allow the electric field device to have resistance to high temperatures.

In an embodiment of the present invention, the electric field cathode has a diameter of 1-3 mm, and the inter-electrode distance between the electric field anode and the electric field cathode is 2.5-139.9 mm. The ratio of the dust accumulation area of the electric field anode to the discharge area of the electric field cathode is 1.667:1-1680:1.

In view of the special performance of ionization dedusting, ionization dedusting is suitable for removing particulates in gas. For example, it can be used to remove particulates in engine emissions. However, years of research by many universities, research institutes, and enterprises have shown that existing electric field dedusting devices are still not suitable for use in vehicles. First, prior art electric field dedusting devices are too bulky in volume and it is difficult to install prior art electric field dedusting devices in a vehicle. Secondly and more importantly, prior art electric field dedusting devices only can remove about 70% of particulates and therefore fail to meet emission standards in many countries.

The inventor of the present invention found that the defects of the prior art electric field dedusting devices are caused by electric field coupling. In the present invention, by reducing the coupling time of the electric field, the dimensions (i.e., the volume) of the electric field dedusting devices can be significantly reduced. For example, the dimensions of the ionization dedusting device of the present invention are about one-fifth of the dimensions of existing ionization dedusting devices. In order to obtain an acceptable particle removal rate, existing ionization dedusting devices are set to have a gas flow velocity of about 1 m/s. However, in the present invention, when the gas flow velocity is increased to 6 m/s, a higher particle removal rate can still be obtained. When dealing with a gas at a given flow rate, increasing the gas speed makes it possible to reduce the dimensions of the electric field dedusting device.

The present invention can also significantly improve the particle removal rate. For example, when the gas flow velocity is about 1 m/s, a prior art electric field dedusting device can remove about 70% of the particulates in engine emission, while the present invention can remove about 99% of particulates, even if the gas flow velocity is 6 m/s. Therefore, the present invention can meet the latest emission standards.

As a result of the inventor discovering the effect of electric field coupling and discovering a method for reducing the times of electric field coupling, the present invention achieves the above-described unexpected results. Therefore, the present invention can be used to manufacture an electric field dedusting device for vehicles.

In an embodiment of the present invention, the electric field device further includes an auxiliary electric field unit configured to generate an auxiliary electric field that is not parallel to the exhaust gas ionization dedusting electric field.

In an embodiment of the present invention, the electric field device further includes an auxiliary electric field unit, the ionization electric field includes a flow channel, and the auxiliary electric field unit is configured to generate an auxiliary electric field that is not perpendicular to the flow channel.

In an embodiment of the present invention, the auxiliary electric field unit includes a first electrode, and the first electrode of the auxiliary electric field unit is provided at or close to an entrance of the ionization electric field. In an embodiment of the present invention, the first electrode is a cathode. In an embodiment of the present invention, the first electrode of the auxiliary electric field unit is an extension of the electric field cathode. In an embodiment of the present invention, the first electrode of the auxiliary electric field unit and the electric field anode have an included angle α, wherein 0 °<α≤125 °, or 45 °<α≤125 °, or 60 °≤α≤100°, or α=90°.

In an embodiment of the present invention, the auxiliary electric field unit includes a second electrode, and the second electrode of the auxiliary electric field unit is provided at or close to an exit of the ionization electric field. In an embodiment of the present invention, the second electrode is an anode. In an embodiment of the present invention, the second electrode of the auxiliary electric field unit is an extension of the electric field anode. In an embodiment of the present invention, the second electrode of the auxiliary electric field unit and the electric field cathode have an included angle α, wherein 0 °<α≤125 °, or 45 °<α≤125 °, or 60 °≤α≤100 °, or α=90°.

In an embodiment of the present invention, the electrodes of the auxiliary electric field and electrodes of the ionization electric field are provided independently of each other.

The ionization electric field between the electric field anode and the electric field cathode is also referred to as a third electric field. In an embodiment of the present invention, a fourth electric field that is not parallel to the third electric field is further formed between the electric field anode and the electric field cathode. In another embodiment of the present invention, the fourth electric field is not perpendicular to a flow channel of the ionization electric field. The fourth electric field, which is also referred to as an auxiliary electric field, can be formed by one or two second auxiliary electrodes. When the fourth electric field is formed by one second auxiliary electrode, the second auxiliary electrode can be placed at an entrance or an exit of the ionization electric field, and the second auxiliary electric field may carry a negative potential or a positive potential. When the second auxiliary electrode is a cathode, it is provided at or close to the entrance of the ionization electric field. The second auxiliary electrode and the electric field anode have an included angle α, wherein 0 °<α≤125 °, 45 °<α≤125 °, 60 °≤α≤100 °, or α=90 °. When the second auxiliary electrode is an anode, it is provided at or close to the exit of the ionization electric field, and the second auxiliary electrode and the electric field cathode have an included angle α, wherein 0 °<α≤125 °, 45 °<α≤125 °, 60 °≤α≤100 °, or α=90 °. When the fourth electric field is formed by two second auxiliary electrodes, one of the second auxiliary electrodes may carry a negative potential, and the other one of the second auxiliary electrodes may carry a positive potential. One of the second auxiliary electrodes may be placed at the entrance of the ionization electric field, and the other one of the second auxiliary electrodes is placed at the exit of the ionization electric field. The second auxiliary electrode may be a part of the electric field cathode or the electric field anode. Namely, the second auxiliary electrode may be constituted by an extended section of the electric field cathode or the electric field anode, in which case the electric field cathode and the electric field anode may have different lengths. The second auxiliary electrode may also be an independent electrode, which is to say that the second auxiliary electrode need not be a part of the electric field cathode or the electric field anode, in which case the fourth electric field and the third electric field have different voltages and can be independently controlled according to working conditions.

The fourth electric field can apply a force toward the exit of the ionization electric field to negatively charged oxygen ions between the electric field anode and the electric field cathode such that the negatively charged oxygen ions between the electric field anode and the electric field cathode have a speed of movement toward the exit. In a process in which the exhaust gas flows into the ionization electric field and flows towards the exit of the ionization electric field, the negatively charged oxygen ions also move towards the exit of the ionization electric field and the electric field anode. The negatively charged oxygen ions will be combined with particulates and the like in the exhaust gas in the process of moving toward the exit of the ionization electric field and the electric field anode. As the oxygen ions have a speed of movement toward the exit, when the oxygen ions are combined with the particulates, no stronger collision will be created therebetween, thus avoiding higher energy consumption due to stronger collision, ensuring that the oxygen ions are more readily combined with the particulates, and leading to a higher charging efficiency of the particulates in the gas. In addition, under the action of the electric field anode, more particulates can be collected, ensuring a higher dedusting efficiency of the electric field device. For the electric field device, the collection rate of particulates entering the electric field along an ion flow direction is improved by nearly 100% compared with the collection rate of particulates entering the electric field in a direction countering the ion flow direction, thereby improving the dust accumulating efficiency of the electric field and reducing the power consumption of the electric field. A main reason for the relatively low dedusting efficiency of prior art dust collecting electric fields is also that the direction of dust entering the electric field is opposite to or perpendicular to the direction of the ion flow in the electric field, so that the dust and the ion flow collide violently with each other and generate relatively high energy consumption. In addition, the charging efficiency is also affected, further reducing the dust collecting efficiency of the prior art electric fields and increasing the power consumption. When the electric field device collects dust in a gas, the gas and the dust enter the electric field along the ion flow direction, the dust is sufficiently charged, and the consumption of the electric field is low. The dust collecting efficiency of a unipolar electric field will reach 99.99%. When the gas and the dust enter the electric field in a direction countering the ion flow direction, the dust is insufficiently charged, the power consumption by the electric field will also be increased, and the dust collecting efficiency will be 40%-75%. In an embodiment of the present invention, the ion flow formed by the electric field device facilitates fluid transportation, increasing of oxygen to a gas intake, heat exchange and so on by an unpowered fan.

As the electric field anode continuously collects particulates and the like in the exhaust gas, the particulates and the like are accumulated on the electric field anode and form carbon black. The thickness of the carbon black is increased continuously such that the inter-electrode distance is reduced. In an embodiment of the present invention, when it is detected that the electric field current has increased, an electric field back corona discharge phenomenon is used in cooperation with an increase in a voltage and restriction of an injection current, so that rapid discharge occurring at a deposition position of generates a large amount of plasma. The low-temperature plasmas enable organic components of the carbon black to be deeply oxidized and break polymer bonds to form small molecular carbon dioxide and water, thus completing the cleaning of carbon black. As oxygen in the air participates in ionization at the same time, ozone is formed, the ozone molecular groups capture the deposited oil stain molecular groups at the same time, the carbon-hydrogen bond breakage in the oil stain molecules is accelerated, and a part of oil molecules are carbonized, so the purpose of purifying volatile matter in the exhaust gas is achieved. In addition, carbon black cleaning is achieved using plasma to achieve an effect that cannot be achieved by conventional cleaning methods. Plasma is a state of matter and is also referred to as the fourth state of matter. It does not belong to the three common states, i.e., solid state, liquid state, and gas state. Sufficient energy applied to gas enables the gas to be ionized into a plasma state. The "active" components of the plasma include ions, electrons, atoms, reactive groups, excited state species (metastable species), photons, and the like. In an embodiment of the present invention, when dust is accumulated in the electric field, the electric field device detects the electric field current and realizes carbon black cleaning in any one of the following manners:
(1) the electric field device increases the electric field voltage when the electric field current has increased to a given value;
(2) the electric field device uses an electric field back corona discharge phenomenon to complete the carbon black cleaning when the electric field current has increased to a given valuel;
(3) the electric field device uses an electric field back corona discharge phenomenon, increases the electric field voltage, and restricts an injection current to complete the carbon black cleaning, when the electric field current has increased to a given value to complete the carbon black cleaning; and
(4) the electric field device uses an electric field back corona discharge phenomenon, increases the electric field voltage, and restricts an injection current, when the electric field current has increased to a given value so that rapid discharge occurring at a deposition position of the anode generates plasmas, and the plasmas enable organic components of the carbon black to be deeply oxidized and break polymer bonds to form small molecular carbon dioxide and water, thus completing the carbon black cleaning.

In an embodiment of the present invention, the electric field device performs a carbon black removing treatment when the dust is accumulated to a certain n extent in the electric field.

In an embodiment of the present invention, the electric field device detects an electric field current to determine whether the dust is accumulated to a certain extent and whether the carbon black removing treatment is needed.

In an embodiment of the present invention, the electric field device increases an electric field voltage to perform the carbon black removing treatment.

In an embodiment of the present invention, the electric field device performs the carbon black removing treatment using an electric field back corona discharge phenomenon.

In an embodiment of the present invention, the electric field anode and the electric field cathode are each electrically connected to a different one of two electrodes of a power supply. A suitable voltage level should be selected for the voltage applied to the electric field anode and the electric field cathode. The specifically selected voltage level depends upon the volume, the temperature resistance, the dust holding rate, and other parameters of the electric field device. For example, the voltage ranges from 1 kv to 50 kv. In designing, the temperature resistance conditions and parameters of the inter-electrode distance and temperature are considered first: 1 MM<30 degrees, the dust accumulation area is greater than 0.1 square/kilocubic meter/hour, the length of the electric field is greater than 5 times the diameter of an inscribed circle of a single tube, and the gas flow velocity in the electric field is controlled to be less than 9 m/s. In an embodiment of the present invention, the electric field anode is comprised of second hollow anode tubes and has a honeycomb shape. An end opening of each second hollow anode tube may be circular or polygonal. In an embodiment of the present invention, an inscribed circle inside the second hollow anode tube has a diameter in the range of 5-400 mm, a corresponding voltage is 0.1-120 kv, and a corresponding current of the second hollow anode tube is 0.1-30 A. Different inscribed circles corresponding to different corona voltages, about 1 KV/1 MM.

In an embodiment of the present invention, the electric field device includes a second electric field stage. The second electric field stage includes a plurality of second electric field generating units, and the second electric field generating unit may be in one or plural. The second electric field generating unit, which is also referred to as a second dust collecting unit, includes the electric field anode and the electric field cathode. There may be one or more second dust collecting units. When there is a plurality of second electric field stages, the dust collecting efficiency of the electric field device can be effectively improved. In the same second electric field stage, each electric field anode has the same polarity, and each electric field cathode has the same polarity. When there is a plurality of second electric field stages, the second electric field stages are connected in series. In an embodiment of the present invention, the electric field device further includes a plurality of connection housings, and the serially connected second electric field stages are connected by the connection housings. The distance between two adjacent electric field stages is greater than 1.4 times the inter-electrode distance.

In an embodiment of the present invention, the electric field is used to charge an electret material. When the electric field device fails, the charged electret material is used to remove dust.

In an embodiment of the present invention, the electric field device includes an electret element.

In an embodiment of the present invention, the electret element is provided inside the electric field anode.

In an embodiment of the present invention, when the electric field anode and the electric field cathode are powered on, the electret element is in the ionization electric field.

In an embodiment of the present invention, the electret element is close to the electric field device exit, or the electret element is provided at the electric field device exit.

In an embodiment of the present invention, the electric field anode and the electric field cathode form an exhaust gas flow channel, and the electret element is provided in the exhaust gas flow channel.

In an embodiment of the present invention, the exhaust gas flow channel includes an exhaust gas flow channel exit, and the electret element is close to the exhaust gas flow channel exit, or the electret element is provided at the exhaust gas flow channel exit.

In an embodiment of the present invention, the cross section of the electret element in the exhaust gas flow channel occupies 5%-100% of the cross section of the exhaust gas flow channel.

In an embodiment of the present invention, the cross section of the electret element in the exhaust gas flow channel occupies 10%-90%, 20%-80%, or 40%-60% of the cross section of the exhaust gas flow channel.

In an embodiment of the present invention, the cross section of the electret element in the exhaust gas flow channel occupies 5%, 10%, 20%, 40%, 60%, 80%, 90% or 100% of the cross section of the exhaust gas flow channel.

In an embodiment of the present invention, the ionization electric field charges the electret element.

In an embodiment of the present invention, the electret element has a porous structure.

In an embodiment of the present invention, the electret element is a textile.

In an embodiment of the present invention, the electric field anode has a tubular interior, the electret element has a tubular exterior, and the electric field anode is disposed around the electret element like a sleeve.

In an embodiment of the present invention, the electret element is detachably connected to the electric field anode.

In an embodiment of the present invention, materials forming the electret element include an inorganic compound having electret properties. Electret properties refer to the ability of the electret element to carry electric charges after being charged by an external power supply and still retain certain charges after being completely disconnected from the power supply so as to act as an electrode and play the role of an electric field electrode.

In an embodiment of the present invention, the inorganic compound is one or a combination of compounds selected from an oxygen-containing compound, a nitrogen-containing compound, and a glass fiber.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of materials selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the electret element include an organic compound having electret properties. Electret properties refer to the ability of the electret element to carry electric charges after being charged by an external power supply and still retain certain charges after being completely disconnected from the power supply so as to act as an electrode and play the role of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

The ionization electric field is generated in a condition with a power-on drive voltage. The ionization electric field is used to ionize a part of the substance to be treated, adsorb particulates in the exhaust gas, and meanwhile charge the electret element. When the electric field device fails. Namely, when there is no power-on drive voltage, the charged electret element generates an electric field, and the particulates in the exhaust gas are adsorbed using the electric field generated by the charged electret element. Namely, the particulates can still be adsorbed when the ionization electric field is in trouble.

In an embodiment of the present invention, the electric field device includes a water-removing mechanism, which can dedust through cold start.

An exhaust gas dedusting method includes a step of removing liquid water in the exhaust gas when the exhaust gas has a temperature of lower than 100°C and then performing ionization dedusting.

In an embodiment of the present invention, when the exhaust gas has a temperature of ≥ 100°C, ionization dedusting is performed on the exhaust gas.

In an embodiment of the present invention, when the exhaust gas has a temperature of ≤(90°C, liquid water in the exhaust gas is removed, and then ionization dedusting is performed.

In an embodiment of the present invention, when the exhaust gas has a temperature of ≤(80°C, liquid water in the exhaust gas is removed, and then ionization dedusting is performed.

In an embodiment of the present invention, when the exhaust gas has a temperature of ≤(70°C, liquid water in the exhaust gas is removed, and then ionization dedusting is performed.

In an embodiment of the present invention, the liquid water in the exhaust gas is removed with an electrocoagulation demisting method, and then ionization dedusting is performed.

In an embodiment of the present invention, the liquid water in the exhaust gas is removed with any prior art method, and then ionization dedusting is performed.

For the exhaust gas system, in an embodiment of the present invention, the present invention provides an electric field dedusting method, including the following steps:
enabling a dust-containing gas to pass through an ionization electric field generated by an electric field anode and an electric field cathode; and
performing a dust cleaning treatment when dust is accumulated in the electric field.

In an embodiment of the present invention, the dust cleaning treatment is performed when a detected electric field current has increased to a given value.

In an embodiment of the present invention, when the dust is accumulated in the electric field, dust cleaning is performed in any one of the following manners:
(1) using an electric field back corona discharge phenomenon to complete the dust cleaning treatment;
(2) using an electric field back corona discharge phenomenon, increasing a voltage, and restricting an injection current to complete the dust cleaning treatment; or
(3) using an electric field back corona discharge phenomenon, increasing a voltage, and restricting an injection current so that rapid discharge occurring at a deposition position of an anode generates plasmas, and the plasmas enable organic components of the dust to be deeply oxidized and break polymer bonds to form small molecular carbon dioxide and water, thus completing the dust cleaning treatment.

Preferably, the dust is carbon black.

In an embodiment of the present invention, the electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, high temperature-resistant, are capable of supporting their own weight, and are electrochemically stable. In an embodiment of the present invention, titanium is selected as the material of the cathode filaments. The specific shape of the cathode filaments is adjusted according to the shape of the electric field anode. For example, if a dust accumulation surface of the electric field anode is a flat surface, the cross section of each cathode filament is circular. If a dust accumulation surface of the electric field anode is an arcuate surface, the cathode filament needs to be designed to have a polyhedral shape. The length of the cathode filaments is adjusted according to the electric field anode.

In an embodiment of the present invention, the electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the electric field anode. For example, if a dust accumulation surface of the electric field anode is a flat surface, the cross section of each cathode bar needs to be designed with a circular shape. If a dust accumulation surface of the electric field anode is an arcuate surface, each cathode bar needs to be designed with a polyhedral shape.

In an embodiment of the present invention, the electric field cathode is provided in the electric field anode in a penetrating manner.

In an embodiment of the present invention, the electric field anode includes one or more hollow anode tubes provided in parallel. When there is a plurality of hollow anode tubes, all of the hollow anode tubes constitute a honeycomb-shaped electric field anode. In an embodiment of the present invention, the cross section of each hollow anode tube may be circular or polygonal. If the cross section of each hollow anode tube is circular, a uniform electric field can be formed between the electric field anode and the electric field cathode, and dust is not easily accumulated on the inner walls of the hollow anode tubes. If the cross section of each hollow anode tube is triangular, 3 dust accumulation surfaces and 3 dust holding corners can be formed on the inner wall of each hollow anode tube. A hollow anode tube having such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

For the exhaust gas system, in an embodiment, the present invention provides a method for reducing coupling of a dedusting electric field including the following steps:
enabling the exhaust gas to pass through the ionization electric field generated by the electric field anode and the electric field cathode; and
selecting the electric field anode or/and the electric field cathode.

In an embodiment of the present invention, the size selected for the electric field anode or/and the electric field cathode allows the coupling time of the electric field to be ≤3.

Specifically, the ratio of the dust collection area of the electric field anode to the discharge area of the electric field cathode is selected. Preferably, the ratio of a dust accumulation area of the electric field anode to the discharge area of the electric field cathode is selected to be 1.667: 1-1680: 1.

More preferably, the ratio of the dust accumulation area of the electric field anode to the discharge area of the electric field cathode is selected to be 6.67:1-56.67:1.

In an embodiment of the present invention, the exhaust gas dedusting electric field cathode has a diameter of 1-3 mm, and the inter-electrode distance between the exhaust gas dedusting electric field anode and the exhaust gas dedusting electric field cathode is 2.5-139.9 mm. The ratio of the dust accumulation area of the exhaust gas dedusting electric field anode to the discharge area of the exhaust gas dedusting electric field cathode is 1.667:1-1680:1.

Preferably, the inter-electrode distance between the electric field anode and the electric field cathode is selected to be less than 150 mm.

Preferably, the inter-electrode distance between the electric field anode and the electric field cathode is selected to be 2.5-139.9 mm. More preferably, the inter-electrode distance between the electric field anode and the electric field cathode is selected to be 5.0-100 mm.

Preferably, the electric field anode is selected to have a length of 10-180 mm. More preferably, the electric field anode is selected to have a length of 60-180 mm.

Preferably, the electric field cathode is selected to have a length of 30-180 mm. More preferably, the electric field cathode is selected to have a length of 54-176 mm.

In an embodiment of the present invention, the coupling time of the ionization electric field is ≤3. In an embodiment of the present invention, the voltage of the ionization electric field ranges from 1 kv to 50 kv.

In an embodiment of the present invention, the electric field cathode includes a plurality of cathode filaments. Each cathode filament may have a diameter of 0.1 mm-20 mm. This dimensional parameter is adjusted according to application situations and dust accumulation requirements. In an embodiment of the present invention, each cathode filament has a diameter of no more than 3 mm. In an embodiment of the present invention, the cathode filaments are metal wires or alloy filaments, which can easily discharge electricity, high temperature-resistant, are capable of supporting their own weight, and are electrochemically stable. In an embodiment of the present invention, titanium is selected as the material of the cathode filaments. The specific shape of the cathode filaments is adjusted according to the shape of the electric field anode. For example, if a dust accumulation surface of the electric field anode is a flat surface, the cross section of each cathode filament is circular. If a dust accumulation surface of the electric field anode is an arcuate surface, the cathode filament needs to be designed to have a polyhedral shape. The length of the cathode filaments is adjusted according to the electric field anode.

In an embodiment of the present invention, the electric field cathode includes a plurality of cathode bars. In an embodiment of the present invention, each cathode bar has a diameter of no more than 3 mm. In an embodiment of the present invention, the cathode bars are metal bars or alloy bars which can easily discharge electricity. Each cathode bar may have a needle shape, a polygonal shape, a burr shape, a threaded rod shape, or a columnar shape. The shape of the cathode bars can be adjusted according to the shape of the electric field anode. For example, if a dust accumulation surface of the electric field anode is a flat surface, the cross section of each cathode bar needs to be designed with a circular shape. If a dust accumulation surface of the electric field anode is an arcuate surface, each cathode bar needs to be designed with a polyhedral shape.

In an embodiment of the present invention, the electric field cathode is provided in the electric field anode in a penetrating manner.

In an embodiment of the present invention, the electric field anode includes one or more hollow anode tubes provided in parallel. When there is a plurality of hollow anode tubes, all of the hollow anode tubes constitute a honeycomb-shaped electric field anode. In an embodiment of the present invention, the cross section of each hollow anode tube may be circular or polygonal. If the cross section of each hollow anode tube is circular, a uniform electric field can be formed between the electric field anode and the electric field cathode, and dust is not easily accumulated on the inner walls of the hollow anode tubes. If the cross section of each hollow anode tube is triangular, 3 dust accumulation surfaces and 3 dust holding corners can be formed on the inner wall of each hollow anode tube. A hollow anode tube having such a structure has the highest dust holding rate. If the cross section of each hollow anode tube is quadrilateral, 4 dust accumulation surfaces and 4 dust holding corners can be formed, but the assembled structure is unstable. If the cross section of each hollow anode tube is hexagonal, 6 dust accumulation surfaces and 6 dust holding corners can be formed, and the dust accumulation surfaces and the dust holding rate reach a balance. If the cross section of each hollow anode tube is polygonal, more dust accumulation edges can be obtained, but the dust holding rate is sacrificed. In an embodiment of the present invention, an inscribed circle inside each hollow anode tube has a diameter in the range of 5 mm-400 mm.

An exhaust gas dedusting method includes the following steps:
1) adsorbing particulates in an exhaust gas with an ionization electric field; and
2) charging an electret element with the ionization electric field.

In an embodiment of the present invention, the electret element is close to an electric field device exit, or the electret element is provided at the electric field device exit.

In an embodiment of the present invention, the electric field anode and the electric field cathode form an exhaust gas flow channel, and the electret element is provided in the exhaust gas flow channel.

In an embodiment of the present invention, the exhaust gas flow channel includes an exhaust gas flow channel exit, and the electret element is close to the exhaust gas flow channel exit, or the electret element is provided at the exhaust gas flow channel exit.

In an embodiment of the present invention, when the ionization electric field has no power-on drive voltage, the charged electret element is used to adsorb particulates in the exhaust gas.

In an embodiment of the present invention, after adsorbing certain particulates in the exhaust gas, the charged electret element is replaced by a new electret element.

In an embodiment of the present invention, after replacement with the new electret element, the ionization electric field is restarted to adsorb particulates in the exhaust gas and charge the new electret element.

In an embodiment of the present invention, materials forming the electret element include an inorganic compound having electret properties. Electret properties refer to the ability of the electret element to carry electric charges after being charged by an external power supply and still retain certain charges after being completely disconnected from the power supply so as to act as an electrode and play the role of an electric field electrode.

In an embodiment of the present invention, the inorganic compound is one or a combination of compounds selected from an oxygen-containing compounds, nitrogen-containing compounds, and glass fibers.

In an embodiment of the present invention, the oxygen-containing compound is one or a combination of compounds selected from a metal-based oxide, an oxygen-containing complex, and an oxygen-containing inorganic heteropoly acid salt.

In an embodiment of the present invention, the metal-based oxide is one or a combination of oxides selected from aluminum oxide, zinc oxide, zirconium oxide, titanium oxide, barium oxide, tantalum oxide, silicon oxide, lead oxide, and tin oxide.

In an embodiment of the present invention, the metal-based oxide is aluminum oxide.

In an embodiment of the present invention, the oxygen-containing complex is one or a combination of materials selected from titanium zirconium composite oxide and titanium barium composite oxide.

In an embodiment of the present invention, the oxygen-containing inorganic heteropoly acid salt is one or a combination of salts selected from zirconium titanate, lead zirconate titanate, and barium titanate.

In an embodiment of the present invention, the nitrogen-containing compound is silicon nitride.

In an embodiment of the present invention, materials forming the electret element include an organic compound having electret properties. Electret properties refer to the ability of the electret element to carry electric charges after being charged by an external power supply and still retain certain charges after being completely disconnected from the power supply so as to act as an electrode and play the role of an electric field electrode.

In an embodiment of the present invention, the organic compound is one or a combination of compounds selected from fluoropolymers, polycarbonates, PP, PE, PVC, natural wax, resin, and rosin.

In an embodiment of the present invention, the fluoropolymer is one or a combination of materials selected from polytetrafluoroethylene (PTFE), fluorinated ethylene propylene (Teflon-FEP), soluble polytetrafluoroethylene (PFA), and polyvinylidene fluoride (PVDF).

In an embodiment of the present invention, the fluoropolymer is polytetrafluoroethylene.

The present invention also provides a vehicle including the vehicle-mounted exhaust gas and air dedusting system.

The present invention also provides a method for purifying the air in a polluted area, including driving the vehicle in the polluted area.

### Embodiment 1

The vehicle-mounted exhaust gas and air dedusting system of the present embodiment includes an exhaust gas treatment device which is configured to treat an exhaust gas to be emitted into the atmosphere.

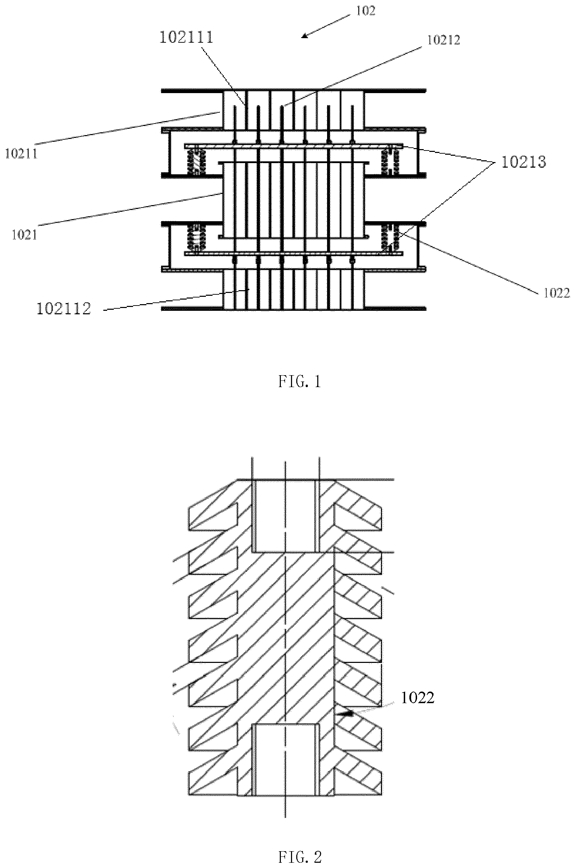

FIG. 1 shows a structural schematic diagram of an embodiment of an exhaust gas treatment device. As shown in FIG. 1, the exhaust gas treatment device 102 includes an electric field device 1021, an insulation mechanism 1022, an equalizing device, a water-removing device and an exhaust gas cooling mechanism.

The electric field device 1021 includes an electric field anode 10211 and an electric field cathode 10212 provided inside the electric field anode 10211. An asymmetric electrostatic field is formed between the electric field anode 10211 and the electric field cathode 10212. After a gas containing particulates enters the electric field device 1021 through an exhaust port, as the electric field cathode 10212 discharges electricity and ionizes the gas, the particulates are able to obtain a negative charge and move towards the electric field anode 10211 and be deposited on the electric field cathode 10212.

Specifically, the interior of the electric field cathode 10212 has a honeycomb shape and is composed of an anode tube bundle group of honeycomb-shaped hollow anode tube bundles. An end opening of each anode tube bundle has a hexagonal shape.

The electric field cathode 10212 includes a plurality of electrode bars which penetrate through each anode tube bundle of the anode tube bundle group in one-to-one correspondence. Each electrode bar has a needle shape, a polygonal shape, a burr shape, a threaded rod shape, or a columnar shape. The diameter of the electrode bar can be not greater than 3 mm.

In the present embodiment, an inlet end of the electric field cathode 10212 is lower than an inlet end of the electric field anode 10211, and an outlet end of the electric field cathode 10212 is flush with an outlet end of the electric field anode 10211 such that an acceleration electric field is formed inside the electric field device 1021.

The insulation mechanism 1022 suspended outside of the gas flow path includes an insulation portion and a heat-protection portion. The insulation portion is made of a ceramic material or a glass material. The insulation portion is an umbrella-shaped string ceramic column, with the interior and the exterior of the umbrella being glazed. FIG. 2 shows a structural schematic diagram of an embodiment of an umbrella-shaped insulation mechanism.

As shown in FIG. 1, in an embodiment of the present invention, the electric field cathode 10212 is mounted on an cathode supporting plate 10213, and the cathode supporting plate 10213 is connected to the electric field anode 10211 through the insulation mechanism 1022. In an embodiment of the present invention, the electric field anode 10211 includes a first anode portion 102112 and a second anode portion 102111. The first anode portion 102112 is close to an entrance of the electric device, and the second anode portion 102111 is close to an exit of the electric device. The cathode supporting plate 10213 and the insulation mechanism 1022 are between the first anode portion 102112 and the second anode portion 102111. That is, the insulation mechanism 1022, which is mounted in the middle of the ionization electric field or in the middle of the electric field cathode 10212, can play a good role in supporting the electric field cathode 10212 and can function to secure the electric field cathode 10212 relative to the electric field anode 10211 such that a set distance is maintained between the electric field cathode 10212 and the electric field anode 10211.

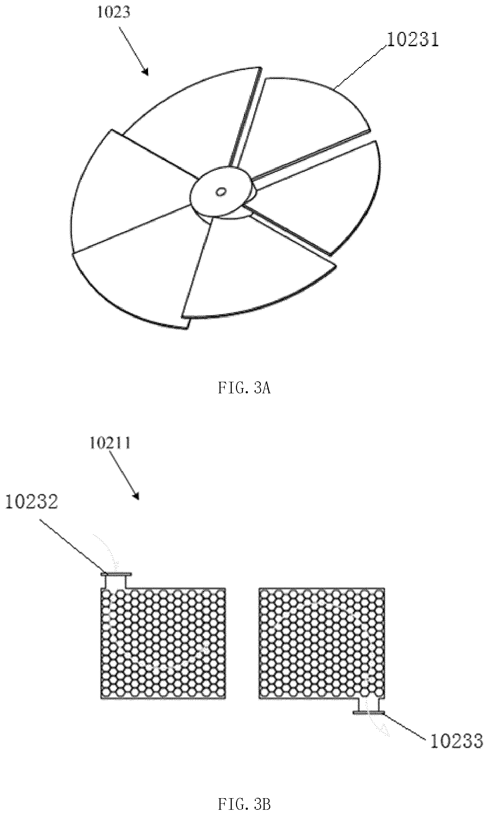

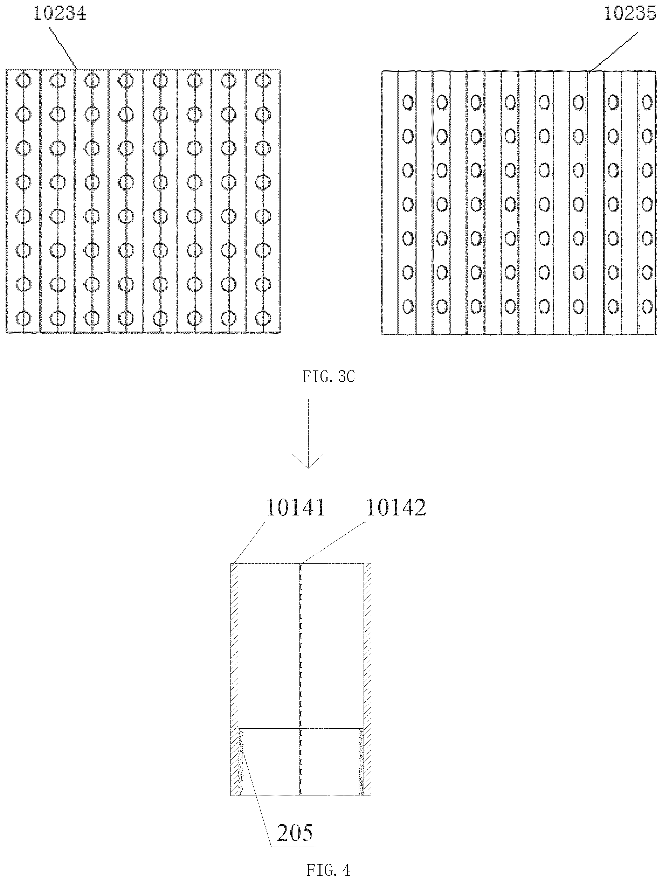

The equalizing device 1023 is provided at an inlet end of the electric field device 1021. FIG. 3A, FIG. 3B, and FIG. 3C show three implementation structural diagrams of the equalizing device.

As shown in FIG. 3A, when the electric field anode 10211 has a cylindrical outer shape, the equalizing device 1023 is located between the air entrance, exhaust gas entrance and an ionization electric field formed by the electric field anode and the electric field cathode. It is composed of a plurality of equalizing blades 10231 rotating around a center of the air entrance and exhaust gas entrance. The equalizing device 1023 can enable varied air inflows of the engine at various rotational speeds to uniformly pass through the electric field generated by the electric field anode and at the same time can keep a constant internal temperature and sufficient oxygen for the electric field anode.

As shown in FIG. 3B, when the electric field anode 10211 has a cubic outer shape, the equalizing device includes the following:
an inlet pipe 10232 provided at one side of the electric field anode; and
an outlet pipe 10233 provided at the other side of the electric field anode, wherein the one side on which the inlet pipe 10232 is mounted is opposite to the other side on which the outlet pipe 10233 is mounted.

As shown in FIG. 3C, the equalizing device may further include a second venturi plate equalizing mechanism 10234 provided at the inlet end of the electric field anode and a third venturi plate equalizing mechanism 10235 (the third venturi plate equalizing mechanism has a folded shape when viewed from above) provided at the outlet end of the electric field anode. The third venturi plate equalizing mechanism is provided with inlet holes and the third venturi plate equalizing mechanism is provided with outlet holes. The inlet holes and the outlet holes are arranged in a staggered manner. A front surface is used for gas intake, and a side surface is used for gas discharge, thereby forming a cyclone structure.

The water-removing device is used to remove the liquid water before the electric field device entrance. And the liquid water in the exhaust gas is removed by using the water-removing device, when the exhaust gas has a temperature of lower than 100°C. And the water-removing device 207 is any prior art water-removing device.

### Embodiment 2

An electric field device shown in FIG. 4 includes an electric field anode 10141, an electric field cathode 10142, and an electret element 205. An ionization electric field is formed when the electric field anode 10141 and the electric field cathode 10142 are connected to a power supply. The electret element 205 is provided in the ionization electric field. The arrow in FIG. 4 shows the flow direction of a substance to be treated. The electret element is provided at the electric field device exit. The ionization electric field charges the electret element. The electret element has a porous structure, and the material of the electret element is alumina. The electric field anode has a tubular interior, the electret element has a tubular exterior, and the electric field anode is disposed around the electret element like a sleeve. The electret element is detachably connected with the electric field anode.

An dedusting method includes the following steps:
a) adsorbing particulates in an exhaust gas with an ionization electric field; and
b) charging an electret element with the ionization electric field.

In this method, the electret element is provided at the electric field device exit, and the material of the electret element is alumina. When the ionization electric field has no power-on drive voltage, the charged electret element is used to adsorb particulates in the exhaust gas. After adsorbing certain particulates in the exhaust gas, the charged electret element is replaced by a new electret element. After replacement with the new electret element, the ionization electric field is restarted to adsorb particulates in the exhaust gas and charge the new electret element.

The above-described electric field device and the electrostatic dedusting method are used to treat exhaust gas after a motor vehicle is started, and the ionization electric field is used to adsorb particulates in the exhaust gas after the motor vehicle is started. The electret element is charged by the ionization electric field. When the ionization electric field has no power-on drive voltage (i.e., when it is in trouble), the charged electret element is used to adsorb the particulates in the gas exhaust, and a purification efficiency of more than 50% can be achieved.

### Embodiment 3

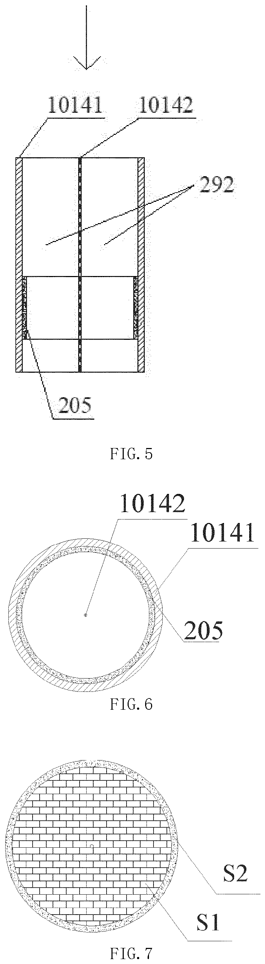

An electric field device shown in FIG. 5 and FIG. 6 includes an electric field anode 10141, an electric field cathode 10142, and an electret element 205. The electric field anode 10141 and the electric field cathode 10142 form an exhaust gas flow channel 292, and the electret element 205 is provided in the exhaust gas flow channel 292. The arrow in FIG. 5 shows the flow direction of a substance to be treated. The exhaust gas flow channel 292 includes an exhaust gas flow channel exit, and the electret element 205 is close to an exhaust gas flow channel exit. The cross section of the electret element 205 in the exhaust gas flow channel 292 occupies 10% of the cross section of the exhaust gas flow channel 292, as shown in FIG. 7, which is S2/(S1+S2)□ 100%, where a first cross sectional area S2 is the cross sectional area of the electret element in the exhaust gas flow channel, the sum of the first cross sectional area S1 and the second cross sectional area S2 is the cross sectional area of the exhaust gas flow channel, and the first cross sectional area S1 does not include the cross sectional area of the electric field cathode 10142. An ionization electric field is formed when the electric field anode and the electric field cathode are connected to a power supply. The ionization electric field charges the electret element. The electret element has a porous structure, and the material of the electret element is polytetrafluoroethylene. The electric field anode has a tubular interior, the electret element has a tubular exterior, and the electric field anode is disposed around the electret element like a sleeve. The electret element is detachably connected with the electric field anode.

An electrostatic dedusting method includes the following steps:
a) adsorbing particulates in an exhaust gas with an ionization electric field; and
b) charging an electret element with the ionization electric field.

In this method, the electret element is close to the exhaust gas flow channel exit, and the material forming the electret element is polytetrafluoroethylene. When the ionization electric field has no power-on drive voltage, the charged electret element is used to adsorb particulates in the exhaust gas. After adsorbing certain particulates in the exhaust gas, the charged electret element is replaced by a new electret element. After the electret element is replaced by the new electret element, the ionization electric field is restarted to adsorb particulates in the exhaust gas and charge the new electret element.

The above-described electric field device and the electrostatic dedusting method are used to treat an exhaust gas after a motor vehicle is started, the ionization electric field is used to adsorb particulates in the exhaust gas after the motor vehicle is started, and the electret element is charged by the ionization electric field. When the ionization electric field has no power-on drive voltage (i.e., when it is in trouble), the charged electret element is used to adsorb particulates in the exhaust gas, and a purification efficiency of more than 30% can be achieved.

### Embodiment 4

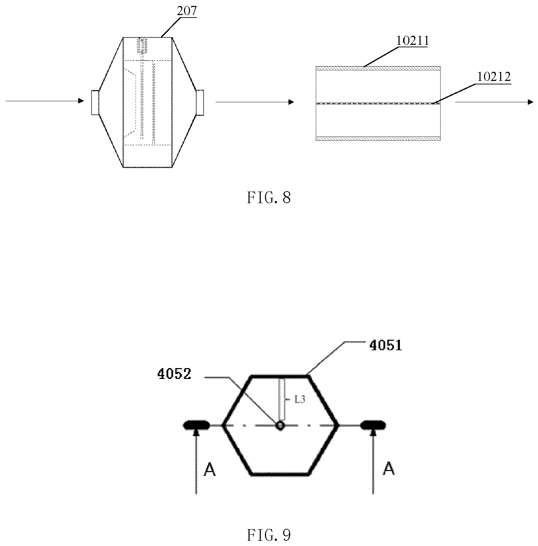

As shown in FIG. 8, the vehicle-mounted exhaust gas and air dedusting system includes a water-removing device 207 and an electric field device. The electric field device includes an electric field anode 10211 and an electric field cathode 10212. An ionization electric field is formed by the electric field anode 10211 and the electric field cathode 10212. The water-removing device 207 is used to remove the liquid water before the electric field device entrance. And the liquid water in the exhaust gas is removed by using the water-removing device, when the exhaust gas has a temperature of lower than 100 °C . And the water-removing device 207 is any prior art water-removing device. The arrow in Fig. 8 shows the flow direction of the exhaust gas.

An exhaust gas dedusting method includes the following steps: When the exhaust gas has a temperature of lower than 100°C, liquid water in the exhaust gas is removed, and then ionization dedusting is performed, wherein the liquid water in the exhaust gas is removed by any prior art method. When the exhaust gas is exhaust gas of a gasoline engine during a cold start, water drops, i.e., liquid water in the exhaust gas is reduced, uneven discharge of the ionization electric field and breakdown of the electric field cathode and the electric field anode are reduced, and the ionization dedusting efficiency is higher than 99.9%. The ionization dedusting efficiency of a dedusting method in which liquid water in the exhaust gas is not removed is below 70%. Therefore, when the exhaust gas has a temperature of lower than 100°C, the liquid water in the exhaust gas is removed, and then ionization dedusting is carried out to reduce water drops, i.e., liquid water, in the exhaust gas to reduce uneven discharge of the ionization electric field and breakdown of the electric field cathode and the electric field anode, thus improving the ionization dedusting efficiency.

### Embodiment 5

As shown in FIG. 9, in the present embodiment, an electric field generating unit, which is applicable to an electric field device, includes an electric field anode 4051 and an electric field cathode 4052 for generating an ionization electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. A ionization electric field is formed between the electric field anode 4051 and the electric field cathode 4052. This ionization electric field is a static electric field.

As shown in FIG. 9, FIG. 10, and FIG. 11, in the present embodiment, the electric field anode 4051 is in the shape of a hollow regular hexagonal tube, the electric field cathode 4052 is in the shape of a rod. The electric field cathode 4052 is provided in the electric field anode 4051 in a penetrating manner.

A method for reducing electric field coupling includes the following steps: selecting the ratio of the dust collection area of the electric field anode 4051 to the discharge area of the electric field cathode 4052 to be 6.67:1, selecting the inter-electrode distance between the electric field anode 4051 and the electric field cathode 4052 to be 9.9 mm, selecting the length of the electric field anode 4051 to be 60 mm, and selecting the length of the electric field cathode 4052 to be 54 mm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052. There is an included angle α between an exit end of the electric field anode 4051 and a near exit end of the electric field cathode 4052, wherein α=118°. Under the action of the electric field anode 4051 and the electric field cathode 4052, more substances to be treated can be collected, the coupling time of the electric field of ≤3 is realized, and coupling consumption of the electric field to aerosols, water mist, oil mist, and loose smooth particulates can be reduced, thereby saving the electric energy of the electric field by 30-50%.

In the present embodiment, the electric field device includes an electric field stage composed of a plurality of the above-described electric field generating units, and there is a plurality of electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

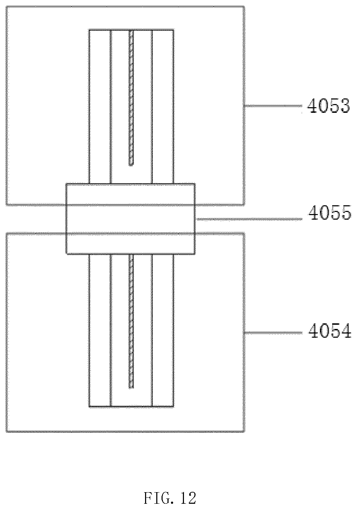

The plurality of electric field stages are connected in series to each other by a connection housing, and the distance between two adjacent electric field stages is greater than 1.4 times the inter-electrode distance. As shown in FIG. 12, there are two electric field stages, i.e., a first-stage electric field 4053 and a second-stage electric field 4054 which are connected in series by the connection housing 4055.

In the present embodiment, the substance to be treated can be granular dust and can also be other impurities that need to be treated, such as aerosols, water mist, and oil mist.

In the present embodiment, the gas can be an exhaust gas which has been discharged from an engine.

### Embodiment 6

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, the electric field cathode 4052 is in the shape of a rod, and the electric field cathode 4052 is provided in the electric field anode 4051 in a penetrating manner.

A method for reducing electric field coupling includes the following steps: selecting the ratio of the dust collection area of the electric field anode 4051 to the discharge area of the electric field cathode 4052 to be 1680:1, selecting the inter-electrode distance between the electric field anode 4051 and the electric field cathode 4052 to be 139.9 mm, selecting the length of the electric field anode 4051 to be 180 mm, and selecting the length of the electric field cathode 4052 to be 180 mm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, the exit end of the electric field anode 4051 is flush with a near exit end of the electric field cathode 4052. Under the action of the electric field anode 4051 and the electric field cathode 4052, more substances to be treated can be collected, the coupling time of the electric field, ≤3, is realized, and coupling consumption of the electric field to aerosols, water mist, oil mist and loose smooth particulates can be reduced, saving the electric energy of the electric field by 20-40%.

In the present embodiment, the substance to be treated can be granular dust and can also be other impurities that need to be treated, such as aerosols, water mist, and oil mist.

In the present embodiment, the gas can be an exhaust gas which is discharged from an engine.

### Embodiment 7

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, the electric field cathode 4052 is in the shape of a rod, and the electric field cathode 4052 is provided in the electric field anode 4051 in a penetrating manner.

A method for reducing electric field coupling includes the following steps: selecting the ratio of the dust collection area of the electric field anode 4051 to the discharge area of the electric field cathode 4052 to be 1.667:1, an inter-electrode distance between the electric field anode 4051 and the electric field cathode 4052 to be 2.5 mm, the length of the electric field anode 4051 to be 30 mm, and the length of the electric field cathode 4052 to be 30 mm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. Under the action of the electric field anode 4051 and the electric field cathode 4052, more substance to be treated can be collected, the coupling time of the electric field of ≤3 is realized, and coupling consumption of the electric field to aerosols, water mist, oil mist and loose smooth particulates can be reduced, saving the electric energy of the electric field by 10-30%.

In the present embodiment, the substance to be treated can be granular dust and can also be other impurities that need to be treated, such as aerosols, water mist, and oil mist.

In the present embodiment, the gas can be an exhaust gas which is discharged from an engine.

### Embodiment 8

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

As shown in FIG. 9, FIG. 10, and FIG. 11, in the present embodiment, the electric field anode 4051 is in the shape of a hollow regular hexagonal tube, the electric field cathode 4052 is in the shape of a rod, and the electric field cathode 4052 is provided in the electric field anode 4051 in a penetrating manner. The ratio of the dust collection area of the electric field anode 4051 to the discharge area of the electric field cathode 4052 is 6.67:1, an inter-electrode distance between the electric field anode 4051 and the electric field cathode 4052 is 9.9 mm. The electric field anode 4051 has a length of 60 mm, and the electric field cathode 4052 has a length of 54 mm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052. There is an included angle α between an exit end of the electric field anode 4051 and a near exit end of the electric field cathode 4052, wherein α=118 °. Under the action of the electric field anode 4051 and the electric field cathode 4052, more substances to be treated can be collected, ensuring a higher dust collecting efficiency of the present electric field generating unit, with a dust collecting efficiency of 99.99% for typical exhaust gas particles (pm 0.23 particulate matter).

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

The plurality of electric field stages are connected in series with each other by a connection housing, and the distance between two adjacent electric field stages is greater than 1.4 times the inter-electrode distance. As shown in FIG. 12, there are two electric field stages, i.e., a first-stage electric field 4053 and a second-stage electric field 4054 which are connected in series by the connection housing 4055.

In the present embodiment, the substance to be treated can be granular dust and can also be other impurities that need to be treated, such as aerosols, water mist, and oil mist.

In the present embodiment, the gas can be an exhaust gas which is discharged from an engine.

### Embodiment 9

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, and the electric field cathode 4052 is in the shape of a rod. The electric field cathode 4052 is provided in the electric field anode 4051 in a penetrating manner. The ratio of the dust collection area of the electric field anode 4051 to the discharge area of the electric field cathode 4052 is 1680:1, and the inter-electrode distance between the electric field anode 4051 and the electric field cathode 4052 is 139.9 mm. The electric field anode 4051 has a length of 180 mm. The electric field cathode 4052 has a length of 180 mm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. Under the action of the electric field anode 4051 and the electric field cathode 4052, more substances to be treated can be collected, ensuring a higher dust collecting efficiency of the present electric field device, with a dust collecting efficiency of 99.99% for typical exhaust gas particles (pm 0.23 particulate matter).

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

In the present embodiment, the substance to be treated can be granular dust and can also be other impurities that need to be treated, such as aerosols, water mist, and oil mist.

In the present embodiment, the gas can be an exhaust gas which is discharged from an engine.

### Embodiment 10

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, and the electric field cathode 4052 is in the shape of a rod. The electric field cathode 4052 is provided in the electric field anode 4051 in a penetrating manner. The ratio of the dust collection area of the electric field anode 4051 to the discharge area of the electric field cathode 4052 is 1.667:1, and the inter-electrode distance between the electric field anode 4051 and the electric field cathode 4052 is 2.5 mm. The electric field anode 4051 has a length of 30 mm, and the electric field cathode 4052 has a length of 30 mm. The electric field anode 4051 includes an exhaust gas fluid passage having an entrance end and an exit end. The electric field cathode 4052 is disposed in the fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. Under the action of the electric field anode 4051 and the electric field cathode 4052, more substances to be treated can be collected, ensuring a higher dust collecting efficiency of the present electric field device, with a dust collecting efficiency of 99.99% for typical exhaust gas particles (pm 0.23 particulate matter).

In the present embodiment, the electric field anode 4051 and the electric field cathode 4052 constitute a dust collecting unit, and there is a plurality of dust collecting units so as to effectively improve the dust collecting efficiency of the present electric field device utilizing the plurality of dust collecting units.

In the present embodiment, the substance to be treated can be granular dust and can also be other impurities that need to be treated, such as aerosols, water mist, and oil mist.

In the present embodiment, the gas can be an exhaust gas which is discharged from an engine.

### Embodiment 11

In the present embodiment, a vehicle-mounted exhaust gas and air dedusting system includes the electric field device of Embodiment 8, Embodiment 9, or Embodiment 10. An exhaust gas which is discharged from an engine needs to first flow through this electric field device so as to effectively eliminate substances to be treated, such as dust in the gas by utilizing this electric field device. Subsequently, the treated gas is emitted to the air so as to reduce the influence of the exhaust gas on the air.

### Embodiment 12

As shown in FIG. 9, in the present embodiment, an electric field generating unit, which is applicable to an electric field device, includes an electric field anode 4051 and an electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, the electric field cathode 4052 is in the shape of a rod. The electric field cathode 4052 is provided in the electric field anode 4051 in a penetrating manner. The electric field anode 4051 has a length of 5 cm, and the electric field cathode 4052 has a length of 5 cm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. The inter-electrode distance between the electric field anode 4051 and the electric field cathode 4052 is 9.9 mm. Under the action of the electric field anode 4051 and the electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400 °C, the corresponding dust collecting efficiency is 90%. When the electric field has a temperature of 500°C, the corresponding dust collecting efficiency is 50%.

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

In the present embodiment, the substance to be treated can be granular dust.

In the present embodiment, the gas can be an exhaust gas which is discharged from an engine.

### Embodiment 13

As shown in FIG. 9, in the present embodiment, an electric field generating unit, which is applicable to an electric field device, includes a electric field anode 4051 and a electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, the electric field cathode 4052 is in the shape of a rod. The electric field cathode 4052 is provided in the electric field anode 4051 in a penetrating manner. The electric field anode 4051 has a length of 9 cm, and the electric field cathode 4052 has a length of 9 cm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. The inter-electrode distance between the electric field anode 4051 and the electric field cathode 4052 is 139.9 mm. Under the action of the electric field anode 4051 and the electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

In the present embodiment, the substance to be treated can be granular dust.

In the present embodiment, the gas can be an exhaust gas which is discharged from an engine.

### Embodiment 14

As shown in FIG. 9, in the present embodiment, an electric field generating unit, which is applicable to an electric field device, includes a electric field anode 4051 and a electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

In the present embodiment, the electric field anode 4051 is in the shape of a hollow regular hexagonal tube, the electric field cathode 4052 is in the shape of a rod. The electric field cathode 4052 is provided in the electric field anode 4051 in a penetrating manner. The electric field anode 4051 has a length of 1 cm, and the electric field cathode 4052 has a length of 1 cm. The electric field anode 4051 includes an exhaust gas fluid passage having an entrance end and an exit end. The electric field cathode 4052 is disposed in the exhaust gas fluid passage and extends in the direction of the exhaust gas fluid passage. An entrance end of the electric field anode 4051 is flush with a near entrance end of the electric field cathode 4052, and an exit end of the electric field anode 4051 is flush with a near exit end of the electric field cathode 4052. The inter-electrode distance between the electric field anode 4051 and the electric field cathode 4052 is 2.5 mm. Under the action of the electric field anode 4051 and the electric field cathode 4052, it is possible to resist high temperature impact, and more substances to be treated can be collected, ensuring a higher dust collecting efficiency of the electric field generating unit. When the electric field has a temperature of 200°C, the corresponding dust collecting efficiency is 99.9%. When the electric field has a temperature of 400 °C, the corresponding dust collecting efficiency is 90%. When the electric field has a temperature of 500°C, the corresponding dust collecting efficiency is 50%.

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

The plurality of electric field stages are connected in series with each other by a connection housing, and the distance between two adjacent electric field stages is greater than 1.4 times the inter-electrode distance. There are two electric field stages, i.e., a first-stage electric field and a second-stage electric field which are connected in series by the connection housing.

In the present embodiment, the substance to be treated can be granular dust.

In the present embodiment, the gas can be an exhaust gas which is discharged from an engine.

### Embodiment 15

As shown in FIG. 9, in the present embodiment, an electric field generating unit, which is applicable to an electric field device, includes a electric field anode 4051 and a electric field cathode 4052 for generating an electric field. The electric field anode 4051 and the electric field cathode 4052 are each electrically connected to a different one of two electrodes of a power supply. The power supply is a direct-current power supply. The electric field anode 4051 and the electric field cathode 4052 are electrically connected with an anode and a cathode, respectively, of the direct-current power supply. In the present embodiment, the electric field anode 4051 has a positive potential, and the electric field cathode 4052 has a negative potential.

In the present embodiment, a specific example of the direct-current power supply is a direct-current, high-voltage power supply. An ionization electric field is formed between the electric field anode 4051 and the electric field cathode 4052. This ionization electric field is a static electric field.

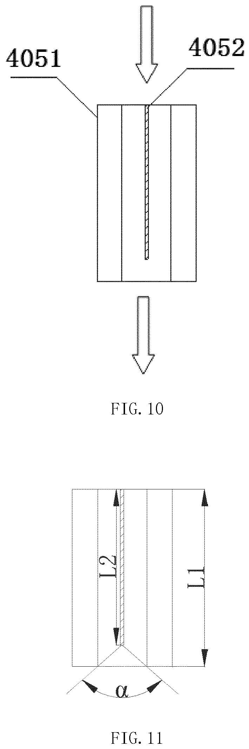

As shown in FIG. 9 and FIG. 10, in the present embodiment, the electric field anode 4051 is in the shape of a hollow regular hexagonal tube, the electric field cathode 4052 is in the shape of a rod, and the electric field cathode 4052 is provided in the electric field anode 4051 in a penetrating manner. The electric field anode 4051 has a length of 3 cm, and the electric field cathode 4052 has a length of 2 cm. The electric field anode 4051 includes a fluid passage having an entrance end and an exit end. The electric field cathode 4052 is disposed in the fluid passage and extends in the direction of the fluid passage. An entrance end of the electric field anode 4051 is flush with a near entrance end of the electric field cathode 4052. An included angle α is formed between an exit end of the electric field anode 4051 and a near exit end of the electric field cathode 4052, wherein α=90°. The inter-electrode distance between the electric field anode 4051 and the electric field cathode 4052 is 20 mm. Under the action of the electric field anode 4051 and the electric field cathode 4052, it is possible to resist high temperature impact, and more substances to be treated can be collected, ensuring a higher dust collecting efficiency of the present electric field generating unit. When the electric field has a temperature of 200°C, the corresponding dust collecting efficiency is 99.9%. When the electric field has a temperature of 400°C, the corresponding dust collecting efficiency is 90%. When the electric field has a temperature of 500°C, the corresponding dust collecting efficiency is 50%.

In the present embodiment, the electric field device includes an electric field stage composed of a plurality of the electric field generating units, and there is a plurality of the electric field stages so as to effectively improve the dust collecting efficiency of the present electric field device utilizing the plurality of dust collecting units. In the same electric field stage, the electric field anodes have the same polarity as each other, and the electric field cathodes have the same polarity as each other.

The plurality of electric field stages are connected in series with each other by a connection housing, and the distance between two adjacent electric field stages is greater than 1.4 times the inter-electrode distance. As shown in Fig. 12, there are two electric field stages, i.e., a first-stage electric field and a second-stage electric field which are connected in series by the connection housing.

In the present embodiment, the substance to be treated can be granular dust.

In the present embodiment, the gas can be an exhaust gas which is discharged from an engine.

### Embodiment 16

In the present embodiment, a vehicle-mounted exhaust gas and air dedusting system includes the electric field device of Embodiment 12, Embodiment 13, Embodiment 14 or Embodiment 15. An exhaust gas which is discharged from an engine needs to first flow through this electric field device so as to effectively eliminate substances to be treated, such as dust in the gas by utilizing this electric field device. Subsequently, the treated gas is emitted to the air so as to reduce the influence of the exhaust gas on the air.

### Embodiment 17

In the present embodiment, an ionization dedusting mechanism, which is applicable to the vehicle-mounted exhaust gas and air dedusting system, includes an electric field cathode 5081 and an electric field anode 5082 electrically connected with a cathode and an anode, respectively, of a direct-current power supply, and an auxiliary electrode 5083 is electrically connected with the anode of the direct-current power supply. In the present embodiment, the electric field cathode 5081 has a negative potential, and both of the electric field anode 5082 and the auxiliary electrode 5083 have a positive potential.

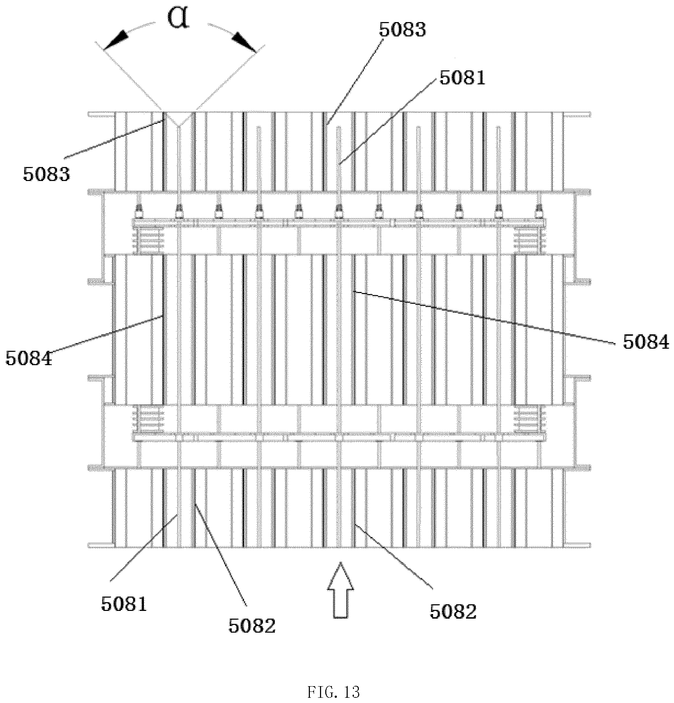

As shown in FIG. 13, the auxiliary electrode 5083 is fixedly connected with the electric field anode 5082 in the present embodiment. After the electric field anode 5082 is electrically connected with the anode of the direct-current power supply, the electrical connection between the auxiliary electrode 5083 and the anode of the direct-current power supply is also realized. The auxiliary electrode 5083 and the electric field anode 5082 have the same positive potential.

As shown in FIG. 13, the auxiliary electrode 5083 can extend in the front-back direction in the present embodiment. Namely, the lengthwise direction of the auxiliary electrode 5083 can be the same as the lengthwise direction of the electric field anode 5082.

As shown in FIG. 13, in the present embodiment, the electric field anode 5082 has a tubular shape, the electric field cathode 5081 is in the shape of a rod, and the electric field cathode 5081 is provided in the electric field anode 5082 in a penetrating manner. In the present embodiment, the auxiliary electrode 5083 also has a tubular shape, and the auxiliary electrode 5083 constitutes an anode tube 5084 with the electric field anode 5082. A front end of the anode tube 5084 is flush with the electric field cathode 5081, and the rear end of the anode tube 5084 exceeds the rear end of the electric field cathode 5081, and the portion of the anode tube 5084 that exceeds the electric field cathode 5081 is the above-described auxiliary electrode 5083. Namely, in the present embodiment, the electric field anode 5082 and the electric field cathode 5081 have the same length as each other, and the electric field anode 5082 and the electric field cathode 5081 are positionally relative in a front-back direction. The auxiliary electrode 5083 is located behind the electric field anode 5082 and the electric field cathode 5081. Thus, an auxiliary electric field is formed between the auxiliary electrode 5083 and the electric field cathode 5081. The auxiliary electric field applies a backward force to a negatively charged oxygen ion flow between the electric field anode 5082 and the electric field cathode 5081 such that the negatively charged oxygen ion flow between the electric field anode 5082 and the electric field cathode 5081 has a backward speed of movement. When the gas containing a substance to be treated flows into the anode tube 5084 from front to back, the negatively charged oxygen ions will be combined with the substance to be treated during the backward movement towards the electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the electric field anode 5082 and the anode tube 5084, more substances to be treated can be collected, ensuring a higher dedusting efficiency of the present ionization dedusting device.

In addition, as shown in FIG. 13, in the present embodiment, there is an included angle α between the rear end of the anode tube 5084 and the rear end of the electric field cathode 5081, wherein 0 °<α≤ 125 °, or 45 °≤α≤125 °, or 60 °≤α≤100 °, or α=90 °.

In the present embodiment, the electric field anode 5082, the auxiliary electrode 5081, and the electric field cathode 5083 constitute a dedusting unit. A plurality of dedusting units is provided so as to effectively improve the dedusting efficiency of the present ionization dedusting device utilizing the plurality of dedusting units.

In the present embodiment, the substance to be treated can be granular dust and can also be other impurities that need to be treated.

In the present embodiment, the gas can be a gas which is to enter an engine or a gas which is discharged from an engine.

In the present embodiment, a specific example of the direct-current power supply is a direct-current, high-voltage power supply. A ionization electric field is formed between the electric field cathode 5081 and the electric field anode 5082. This ionization electric field is a static electric field. In a case where the above-described auxiliary electrode 5083 is absent, an ion flow in the electric field between the electric field cathode 5081 and the electric field anode 5082 flows back and forth between the two electrodes, perpendicular to the direction of the electrodes, and causes back and forth consumption of the ions between the electrodes. In view of this, the relative positions of the electrodes are staggered by use of the auxiliary electrode 5083 in the present embodiment, thereby forming a relative imbalance between the electric field anode 5082 and the electric field cathode 5081. This imbalance will cause a deflection of the ion flow in the electric field. With use of the auxiliary electrode 5083, the present ionization dedusting mechanism forms an electric field that can allow the ion flow to have directivity. In the present embodiment, the above-described ionization dedusting mechanism is also referred to as an electric field device having an acceleration direction. For the present ionization dedusting mechanism, the collection rate of particulates entering the electric field along the ion flow direction is improved by nearly 100% compared with the collection rate of particulates entering the electric field in a direction countering the ion flow direction, thereby improving the dust accumulating efficiency of the electric field and reducing the power consumption by the electric field. A main reason for the relatively low efficiency of the prior art dust collecting electric fields is also that the direction of dust entering the electric field is opposite to or perpendicular to the direction of the ion flow in the electric field so that the dust and the ion flow collide violently with each other and generate relatively high energy consumption. In addition, the charging efficiency is also affected, further reducing the dust collecting efficiency of the prior art electric fields and increasing the power consumption.

In the present embodiment, when the ionization dedusting mechanism is used to collect dust in a gas, the gas and the dust enter the electric field along the ion flow direction, the dust is sufficiently charged, and the consumption of the electric field is low. The dust collecting efficiency of a unipolar electric field will reach 99.99%. When the gas and the dust enter the electric field in a direction countering the ion flow direction, the dust is insufficiently charged, the power consumption by the electric field will also be increased, and the dust collecting efficiency will be 40%-75%. Moreover, in the present embodiment, the ion flow formed by the ionization dedusting mechanism facilitates fluid transportation, increases the oxygen content in to the intake gas, heat exchange and so on by an unpowered fan.

### Embodiment 18

In the present embodiment, an ionization dedusting mechanism, which is applicable to the vehicle-mounted exhaust gas and air dedusting system, includes an electric field cathode and an electric field anode electrically connected with a cathode and an anode, respectively, of a direct-current power supply, and an auxiliary electrode is electrically connected with the anode of the direct-current power supply. In the present embodiment, each of the electric field cathode and the auxiliary electrode has negative potential, and the electric field anode have a positive potential.

In the present embodiment, the auxiliary electrode can be fixedly connected with the electric field cathode. In this way, after the electric field cathode is electrically connected with the cathode of the direct-current power supply, the electrical connection between the auxiliary electrode and the cathode of the direct-current power supply is also realized. The auxiliary electrode extends in a front-back direction in the present embodiment.

In the present embodiment, the electric field anode has a tubular shape, the electric field cathode has a rod shape, and the electric field cathode is provided in the electric field anode in a penetrating manner. In the present embodiment, the above-described auxiliary electrode is also rod-shaped, and the auxiliary electrode and the electric field cathode constitute a cathode rod. A front end of the cathode rod is disposed forward of a front end of the electric field anode, and the portion of the cathode rod that is forward of the electric field anode is the auxiliary electrode. That is, in the present embodiment, the electric field anode and the electric field cathode have the same length as each other, and the electric field anode and the electric field cathode are positionally relative in a front-back direction. The auxiliary electrode is located in front of the electric field anode and the electric field cathode. In this way, an auxiliary electric field is formed between the auxiliary electrode and the electric field anode. This auxiliary electric field applies a backward force to a negatively charged oxygen ion flow between the electric field anode and the electric field cathode such that the negatively charged oxygen ion flow between the electric field anode and the electric field cathode has a backward speed of movement. When the gas containing a substance to be treated flows into the tubular electric field anode from front to back, the negatively charged oxygen ions will be combined with the substance to be treated during the backward movement towards the electric field anode. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. Furthermore, under the action of the electric field anode, more substances to be treated can be collected, ensuring a higher efficiency of the present electric field device.

In the present embodiment, the ectric field anode, the auxiliary electrode, and the electric field cathode constitute a dedusting unit. A plurality of the dedusting units are provided so as to effectively improve the dedusting efficiency of the present ionization dedusting mechanism utilizing the plurality of dedusting units.

In the present embodiment, the substance to be treated can be granular dust and can also be other impurities that need to be treated.

### Embodiment 19

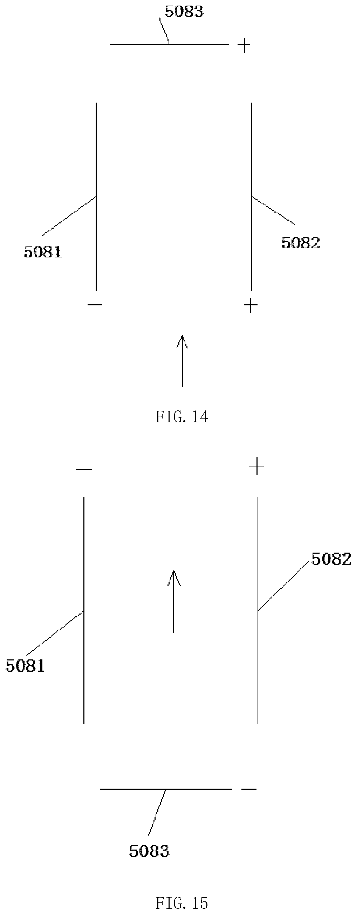

As shown in FIG. 14, in the present embodiment, an ionization dedusting mechanism is applicable to the vehicle-mounted exhaust gas and air dedusting system. An auxiliary electrode 5083 extends in a left-right direction. In the present embodiment, the lengthwise direction of the auxiliary electrode 5083 is different from the lengthwise direction of the electric field anode 5082 and the electric field cathode 5081. Specifically, the auxiliary electrode 5083 may be perpendicular to the electric field anode 5082.

In the present embodiment, the electric field cathode 5081 and the electric field anode 5082 are electrically connected with a cathode and an anode, respectively, of a direct-current power supply, and the auxiliary electrode 5083 is electrically connected with the anode of the direct-current power supply. In the present embodiment, the electric field cathode 5081 has a negative potential, and both of the electric field anode 5082 and the auxiliary electrode 5083 have a positive potential.

As shown in FIG. 14, in the present embodiment, the electric field cathode 5081 and the electric field anode 5082 are positionally relative in the front-back direction, and the auxiliary electrode 5083 is located behind the electric field anode 5082 and the electric field cathode 5081. In this way, an auxiliary electric field is formed between the auxiliary electrode 5083 and electric field cathode 5081. This auxiliary electric field applies a backward force to a negatively charged oxygen ion flow between the electric field anode 5082 and the electric field cathode 5081 such that the negatively charged oxygen ion flow between the electric field anode 5082 and the electric field cathode 5081 has a backward speed of movement. When gas containing a substance to be treated flows from front to back into the electric field between the electric field anode 5082 and the electric field cathode 5081, the negatively charged oxygen ions will be combined with the substance to be treated during the backward movement towards the electric field anode 5082. As the oxygen ions have a backward speed of movement, when the oxygen ions are combined with the substance to be treated, no stronger collision will be created therebetween, thus avoiding higher energy consumption due to stronger collision, whereby the oxygen ions are more readily combined with the substance to be treated, and the charging efficiency of the substance to be treated in the gas is higher. In addition, under the action of the electric field anode 5082, more substances to be treated can be collected, ensuring a higher dedusting efficiency of the present ionization dedusting mechanism.

### Embodiment 20

As shown in FIG. 15, in the present embodiment, an ionization dedusting mechanism is applicable to the vehicle-mounted exhaust gas and air dedusting system. An auxiliary electrode 5083 extends in a left-right direction. In the present embodiment, the lengthwise direction of the auxiliary electrode 5083 is different from the lengthwise direction of the electric field anode 5082 and the electric field cathode 5081. Specifically, the auxiliary electrode 5083 may be perpendicular to the electric field cathode 5081.

In the present embodiment, the electric field cathode 5081 and the electric field anode 5082 are electrically connected with a cathode and an anode, respectively, of a direct-current power supply, and the auxiliary electrode 5083 is electrically connected with the cathode of the direct-current power supply. In the present embodiment, both of the electric field cathode 5081 and the auxiliary electrode 5083 have a negative potential, and the electric field anode 5082 has a positive potential.

As shown in FIG. 15, in the present embodiment, the electric field cathode 5081 and the electric field anode 5082 are positionally relative in a front-back direction, and the auxiliary electrode 5083 is located in front of the electric field anode 5082 and the electric field cathode 5081. In this way, an auxiliary electric field is formed between the auxiliary electrode 5083 and the electric field anode 5082. This auxiliary electric field applies a backward force to a negatively charged oxygen ion flow between the electric field anode 5082 and the electric field cathode 5081 such that the negatively charged oxygen ion flow between the electric field anode 5082 and the electric field cathode 5081 has a backward speed of movement. When gas containing a substance to be treated flows from front to back into the electric field between the electric field anode 5082 and the electric field cathode 5081, the negatively charged oxygen ions will be combined with the substance to be treated during the backward movement towards the electric field anode 5082. As the oxygen ions have a backward speed of movement, when the oxygen ions are combined with the substance to be treated, no stronger collision will be created therebetween, thus avoiding higher consumption of energy due to stronger collision, whereby the oxygen ions are more readily combined with the substance to be treated, and the charging efficiency of the substance to be treated in the gas is higher. Under the action of the electric field anode 5082, more substances to be treated can be collected, ensuring a higher dedusting efficiency of the present ionization dedusting mechanism.

### Embodiment 21

In the present embodiment, the vehicle-mounted exhaust gas and air dedusting system of an engine includes the ionization dedusting mechanism of Embodiment 17, 19, 20, or 21. An exhaust gas which is emitted from an engine needs to first flow through this ionization dedusting mechanism so as to effectively eliminate substances to be treated, such as dust in the gas utilizing the ionization dedusting mechanism. Subsequently, the treated gas is emitted to the air so as to reduce the influence of the exhaust gas from an engine on the air. In the present embodiment, the engine exhaust device is also named as the exhaust gas treatment device, and the exhaust gas dedusting mechanism is also named as the exhaust gas ionization dedusting mechanism.

Summing up, the present invention effectively overcomes various shortcomings in the prior art thereby possessing high industrial availability.

The above embodiments merely illustratively describe the principles of the present invention and effects thereof, rather than limiting the present invention. Anyone familiar with this technology can modify or change the above embodiments without departing from the spirit and scope of the present invention. Therefore, all equivalent modifications or changes made by those with ordinary knowledge in the technical field to which they belong without departing from the spirit and technical ideas disclosed in the present invention should still be covered by the claims of the present invention.

## Claims

1. A vehicle-mounted exhaust gas and air dedusting system, wherein the system includes an exhaust gas entrance; an air entrance; an electric field device, including the an electric field device entrance, an electric field device exit, an electric field cathode and an electric field anode, wherein the electric field cathode and the electric field anode are used to generate an ionization electric field; during working, the exhaust gas and the air pass through the exhaust gas entrance and the air entrance respectively and enter the dedusting system, the exhaust gas and the air pass through the electric field device entrance and enter the electric field device, the exhaust gas and the air are dedusted and purified by ionization electric field device; and the exhaust gas and the air flow through the electric field device exit.

2. The vehicle-mounted exhaust gas and air dedusting system of claim 1, wherein the amount of air which is introduced is 50% to 300% of that of the exhaust gas.

3. The vehicle-mounted exhaust gas and air dedusting system of claim 1, wherein the amount of air which is introduced is 100% to 180% of that of the exhaust gas.

4. The vehicle-mounted exhaust gas and air dedusting system of claim 1, wherein the amount of air which is introduced is 120% to 150% of that of the exhaust gas.

5. The vehicle-mounted exhaust gas and air dedusting system of claim 1, wherein the amount of air which is introduced is higher than 300% of that of the exhaust gas.

6. The vehicle-mounted exhaust gas and air dedusting system of any one of claims 1-5, wherein the system further includes a water-removing device configured to remove liquid water before the electric field device entrance.

7. The vehicle-mounted exhaust gas and air dedusting system of claim 6, wherein when the exhaust gas temperature or the engine temperature is lower than a certain temperature, the water-removing device removes liquid water in the exhaust gas.

8. The vehicle-mounted exhaust gas and air dedusting system of claim 7, wherein the certain temperature is above 90°C and below 100°C.

9. The vehicle-mounted exhaust gas and air dedusting system of claim 7, wherein the certain temperature is above 80°C and below 90°C.

10. The vehicle-mounted exhaust gas and air dedusting system of claim 7, wherein the certain temperature is below 80°C.

11. The vehicle-mounted exhaust gas and air dedusting system of any one of claims 6-10, wherein the water-removing device is an electrocoagulation device.

12. The vehicle-mounted exhaust gas and air dedusting system of any one of claims 1-11, wherein the system further includes the engine.

13. A vehicle, including the vehicle-mounted exhaust gas and air dedusting system of any one of claims 1-12.

14. An method for purifying a pollutant area air, including driving the vehicle of claim 13 in the pollutant area.
